(19) Europäisches Patentamt
European Patent Office
Office européen des brevets

(11) **EP 4 641 806 A1**

(12) **EUROPEAN PATENT APPLICATION**
published in accordance with Art. 153(4) EPC

(43) Date of publication:
**29.10.2025 Bulletin 2025/44**

(21) Application number: **23929564.5**

(22) Date of filing: **12.04.2023**

(51) International Patent Classification (IPC):
*H01M 50/449* (2021.01)

(52) Cooperative Patent Classification (CPC):
H01M 50/449

(86) International application number:
**PCT/CN2023/087926**

(87) International publication number:
**WO 2024/197982 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.03.2023 PCT/CN2023/085617**

(71) Applicant: **Contemporary Amperex Technology
(Hong Kong) Limited
Hong Kong (HK)**

(72) Inventors:
• **LI, Quan
Ningde, Fujian 352100 (CN)**

• **YANG, Jianrui
Ningde, Fujian 352100 (CN)**
• **SUN, Chengdong
Ningde, Fujian 352100 (CN)**
• **OUYANG, Chuying
Ningde, Fujian 352100 (CN)**
• **HUANG, Siying
Ningde, Fujian 352100 (CN)**
• **WANG, Yaohui
Ningde, Fujian 352100 (CN)**

(74) Representative: **Gong, Jinping
CocreateIP
Neumarkter Straße 21
81673 München (DE)**

(54) **SEPARATOR AND PREPARATION METHOD THEREFOR, SECONDARY BATTERY, AND
ELECTRIC APPARATUS**

(57) Provided in the present application are a separator and a preparation method therefor, a secondary battery, and an electric apparatus. The separator comprises a first base film, a second base film, and an intermediate layer, which is located between the first base film and the second base film, wherein the melting point of the first base film is 175 °C or above, and the average pore size of the first base film is larger than or equal to $0.22\,\mu m$; and the intermediate layer comprises filler particles, at least some of which are embedded into the first base film.

FIG. 1

**Description**

CROSS-REFERENCE TO RELATED APPLICATION

The present application claims priority to international application PCT/CN2023/085617 filed on March 31, 2023 and entitled "SEPARATOR AND PREPARATION METHOD THEREFOR, SECONDARY BATTERY, AND ELECTRIC APPARATUS", which is incorporated herein by reference in its entirety.

TECHNICAL FIELD

The present application relates to a separation film and a preparation method therefor, a secondary battery, and an electric device.

BACKGROUND

In recent years, secondary batteries have been widely used in energy storage power systems such as hydropower, thermal power, wind power, and solar power stations, as well as in various fields such as electric tools, electric bicycles, electric motorcycles, electric vehicles, military equipment, and aerospace. With the application and popularization of secondary batteries, the requirements for the reliability thereof are also becoming increasingly stringent.

SUMMARY

The present application provides a separation film and a preparation method therefor, a secondary battery, and an electric device, and aims to improve the safety performance, the energy density and the cycle performance of the secondary battery.
A first aspect of the present application provides a separation film including a first base film, a second base film, and an intermediate layer, the intermediate layer being located between the first base film and the second base film. Where the first base film has a melting point of 175 °C or above and an average pore size of greater than or equal to 0.22 μm. The intermediate layer includes filler particles, at least some of the filler particles being embedded into the first base film.
Without intending to be bound by any theory or explanation, when the separation film includes the first base film, the second base film, and the intermediate layer located between the first base film and the second base film, the separation film can be made to have good heat resistance, high mechanical strength, and self-supporting properties. Specifically, the first base film has a melting point of 175 °C or above, which can provide good heat resistance for the separation film. Furthermore, the average pore size of the first base film is within the above appropriate range, such that an appropriate amount of filler particles can be embedded into the first base film to form a composite structure of the first base film and the filler particles, and thus the mechanical strength, the self-supporting properties and the heat resistance of the separation film can be effectively improved. In addition, the overall thickness of the separation film can be reduced by the embedding of the filler particles into the base film, thereby further improving the energy density of the battery; also, the filler particles can be better embedded into the first base film due to the specific pore size range, such that the probability of powder falling of the filler particles in the intermediate layer is reduced, thereby further improving the reliability of the separation film, and improving the cycle performance of the battery.
Therefore, the separation film according to the present application can enable the secondary battery to simultaneously have better safety performance, higher energy density and good cycle performance.
In any embodiment of the present application, the average pore size of the first base film is 0.22 μm-4.0 μm, and optionally 1.0 μm-2.7 μm.
As the average pore size of the first base film is adjusted to satisfy the above range, embedding of the filler particles into the first base film is facilitated to form a suitable composite structure separation film, thereby allowing the separation film to have excellent air permeability and higher strength while having a small thickness. As a result, the application of the separation film to the secondary battery is conducive to improving the energy density and the cycle performance of the secondary battery.
In any embodiment of the present application, an average pore size of the second base film is smaller than the average pore size of the first base film.
Optionally, the average pore size of the second base film is 0.01 μm-0.5 μm, and more optionally 0.02 μm-0.1 μm.
As the average pore size of the second base film is adjusted to satisfy the above range, the second base film can be enabled to have high mechanical strength, high puncture strength and proper permeability, and thus the reliability of the secondary battery can be further improved.
In any embodiment of the present application, the filler particles are embedded into the first base film to a depth of greater than or equal to 0.2 μm, and optionally 0.5 μm-1.0 μm.

When the filler particles are embedded into the first base film to a depth satisfying the above range, the mechanical strength and the self-supporting properties of the composite structure formed by the filler particles and the first base film can be effectively improved, and the overall thickness of the separation film is reduced in one step. The reliability and the energy density of the secondary battery are therefore advantageously improved.

In any embodiment of the present application, the filler particles are embedded into the second base film to a depth of greater than or equal to 0.1 μm, and optionally 0.1 μm-0.5 μm.

When the filler particles are embedded into the second base film to a depth satisfying the above range, it is possible to improve the structural stability of the separation film and to enable the separation film to have good air permeability and strength. Therefore, the safety performance and the electrochemical performance of the secondary battery are further advantageously improved.

In any embodiment of the present application, the filler particles are embedded into a greater depth in the first base film than in the second base film. This allows the separation film to have high structural stability and good air permeability, such that the reliability and the electrochemical performance of the secondary battery can be improved.

In any embodiment of the present application, the melting point of the first base film is greater than or equal to a melting point of the second base film.

Optionally, the melting point of the first base film is 175 °C to 350 °C, and more optionally 220 °C to 350 °C.

Optionally, the melting point of the second base film is 130 °C to 200 °C, and more optionally 135 °C to 180 °C.

When the melting point of the first base film and/or the second base film is adjusted to fall within the appropriate range above, not only can the separation film be made to have good heat resistance, but the separation film can also be allowed to have good pore-closing characteristics. This makes it possible to achieve both good cycle performance and high reliability of the secondary battery.

In any embodiment of the present application, a machine direction elongation at break of the first base film is 20%-105%, and optionally 40%-90%.

In any embodiment of the present application, a cross direction elongation at break of the first base film is 20%-105%, and optionally 40%-90%.

When the machine direction elongation at break and/or the cross direction elongation at break of the first base film are/is adjusted to satisfy the above ranges, the first base film is facilitated to have a suitable average pore size, thereby facilitating the filler particles to be embedded into the first base film to form a suitable composite structure. As a result, it is beneficial to improving the heat resistance and mechanical strength of the separation film, which in turn is beneficial to improving the reliability of the secondary battery.

In any embodiment of the present application, a machine direction elongation at break of the second base film is less than a cross direction elongation at break of the second base film.

In any embodiment of the present application, the machine direction elongation at break of the second base film is greater than or equal to 40%, and optionally 60%-150%.

In any embodiment of the present application, the cross direction elongation at break of the second base film is greater than or equal to 60%, and optionally 80%-160%.

It is advantageous to improving the elongation property of the separation film through the second base film by adjusting the machine direction elongation at break and/or the cross direction elongation at break of the second base film to satisfy the above range, thereby improving the processability of the separation film. Therefore, it is advantageous for the separation film to have both good processability and high heat resistance, and thus the production yield and reliability of the secondary battery are favorably improved.

In any embodiment of the present application, a porosity of the first base film is greater than a porosity of the second base film.

Optionally, the porosity of the first base film is 50%-98%.

Optionally, the porosity of the second base film is 20%-60%.

The porosity of the first base film and/or the second base film meets given conditions, such that the separation film has good permeability and infiltration performance in the electrolytic solution, and thus the electrochemical performance and the rate capability of the secondary battery are further improved.

In any embodiment of the present application, a relative molecular mass of the first base film is greater than a relative molecular mass of the second base film.

Optionally, the relative molecular mass of the first base film is 300,000 to 6,000,000, and more optionally 1,000,000 to 3,000,000.

Optionally, the relative molecular mass of the second base film is 100,000 to 3,000,000, and more optionally 400,000 to 1,500,000.

As the relative molecular mass of the first base film and/or the second base film is adjusted to satisfy the above range, the melting point of the first base film and/or the second base film can be adjusted to satisfy the range of the embodiments of the present application, thereby contributing to the improvement of the heat resistance of the separation film, thus improving the reliability of the secondary battery.

In any embodiment of the present application, a ratio of a thickness of the first base film to a thickness of the second base film is 0.15-2.0, and optionally 0.3-0.6.

Optionally, the thickness of the first base film is 1 $\mu$m-10 $\mu$m, and more optionally 1 $\mu$m-3 $\mu$m.

Optionally, the thickness of the second base film is 2 $\mu$m-10 $\mu$m, and more optionally 3 $\mu$m-6 $\mu$m.

When the thickness of the first base film and/or the second base film satisfies the above conditions, the separation film can be made to have a smaller thickness while having a higher mechanical strength, thereby facilitating the secondary battery to have both high reliability and high energy density.

In any embodiment of the present application, an air permeability of the first base film is less than an air permeability of the second base film.

Optionally, a ratio of the air permeability of the first base film to the air permeability of the second base film is 0.1-0.5, and more optionally 0.2-0.4.

Optionally, the air permeability of the first base film is 20 sec/100 cc-100 sec/100 cc, and more optionally 30 sec/100 cc-40 sec/100 cc.

Optionally, the air permeability of the second base film is 100 sec/100 cc-300 sec/100 cc, and more optionally 100 sec/100 cc-150 sec/100 cc.

As the air permeability of the first base film and/or the second base film is adjusted to satisfy the above range, the air permeability of the first base film and the second base film can complement each other, such that the separation film has a suitable air permeability to make the separation film have good ionic conduction performance, and thus the electrochemical and rate capability of the secondary battery can be improved.

In any embodiment of the present application, a puncture strength of the first base film is less than a puncture strength of the second base film.

Optionally, the puncture strength of the first base film is 20 gf-150 gf, and more optionally 20 gf-80 gf.

Optionally, the puncture strength of the second base film is 60 gf-400 gf, and more optionally 80 gf-270 gf.

The puncture strength of the first base film and/or the second base film is adjusted to meet the above conditions, such that the risk of the separation film being punctured by lithium dendrites or under mechanical impact is reduced, and thus the reliability of the secondary battery is further improved.

In any embodiment of the present application, a material of the first base film includes at least one of polytetrafluoroethylene and derivatives thereof, polyethylene terephthalate and derivatives thereof, polyimide and derivatives thereof, polyetheretherketone and derivatives thereof, polyphenylene sulfide and derivatives thereof, polybenzimidazole and derivatives thereof, polysulfone and derivatives thereof, and polylactic acid and derivatives thereof.

The material of the first base film is selected from the above suitable substances, which is beneficial for the first base film to have a high melting point, thereby being beneficial for improving the heat resistance of the separation film, and further being beneficial for improving the reliability of the secondary battery.

In any embodiment of the present application, a material of the second base film includes at least one of polyolefin, halogenated polyolefin, polyether, polyester, polyvinyl alcohol, polytetrafluoroethylene and derivatives thereof, polyethylene terephthalate and derivatives thereof, polyimide and derivatives thereof, polyetheretherketone and derivatives thereof, polyphenylene sulfide and derivatives thereof, polybenzimidazole and derivatives thereof, and polysulfone and derivatives thereof.

The material of the second base film is selected from the above suitable substances, which is beneficial for the second base film to be better complementary to the first base film, thereby enabling the separation film to have both good heat resistance and high structural stability. As a result, the reliability of the secondary battery can be further improved, and the probability of safety accidents such as fire and explosion of the secondary battery is reduced.

In any embodiment of the present application, a volume distribution particle size Dv50 of the filler particles is 0.01 $\mu$m-0.8 $\mu$m, and optionally 0.2 $\mu$m-0.8 $\mu$m. Therefore, it is beneficial to improving the mechanical strength, the self-supporting properties and the heat resistance of the separation film, which in turn is beneficial to improving the reliability of the secondary battery.

In any embodiment of the present application, the filler particles are present in an amount of less than or equal to 90%, and optionally 20%-80%, based on the total mass of the intermediate layer.

In any embodiment of the present application, a specific surface area of the filler particles is 2 g/m$^2$-20 g/m$^2$, and optionally 6 g/m$^2$-9 g/m$^2$. Therefore, the infiltration performance of the separation film in the electrolytic solution is favorably improved, thereby advantageously reducing the internal resistance of the secondary battery, improving the cycle performance of the secondary battery, and prolonging the cycle life of the secondary battery.

In any embodiment of the present application, the filler particles include at least one of inorganic particles, organic particles, and organo-metallic framework materials.

Optionally, the inorganic particles include one or more of inorganic particles having a dielectric constant of 5 or more, inorganic particles having ion conductivity but not storing ions, and inorganic particles capable of undergoing electrochemical reactions.

Optionally, the organic particles include one or more of polycarbonate, polythiophene, polypyridine, polystyrene, polyacrylic wax, polyethylene, polypropylene, cellulose, cellulose modifiers, melamine resins, phenolic resins, polyesters, silicone resins, polyimides, polyamideimides, polyaramids, polyphenylene sulfides, polysulfones, polyether sulfones, polyether etherketones, polyaryletherketones, and copolymers of butyl acrylate and ethyl methacrylate.

Optionally, the organo-metallic framework materials include one or more of a nitrogen-containing heterocyclic ligand building structure, an organic carboxylic ligand building structure, and a nitrogen-oxygen-containing mixed ligand building structure.

In any embodiment of the present application, the intermediate layer further includes a binder, the binder including one or more of polyacrylate, polyacrylic acid, polyimide, polytetrafluoroethylene, polyvinylidene fluoride, vinylidene fluoride-trichloroethylene copolymer, polyvinylpyrrolidone, polyvinyl acetate, ethylene-vinyl acetate copolymer, polyethylene oxide, polyarylate, carboxymethyl cellulose, hydroxypropyl cellulose, regenerated cellulose, cellulose acetate, cellulose acetate propionate, cellulose acetate butyrate, polyacrylonitrile, polyvinyl alcohol, polyethylene, polypropylene, starch, cyanoethyl amylopectin, thermoplastic polyurethane, maleic anhydride, and ethylene-acrylic acid copolymer.

Optionally, the binder is present in an amount of less than or equal to 35%, and more optionally 10%-30%, based on the total mass of the intermediate layer.

In any embodiment of the present application, a thickness of the separation film is less than or equal to 7 $\mu$m, and optionally 3 $\mu$m-6 $\mu$m. The thickness of the separation film falling within the given range is advantageous for further improving the energy density of the secondary battery.

Optionally, an air permeability of the separation film is 100 sec/100 cc-300 sec/100 cc, and optionally 120 sec/100 cc-200 sec/100 cc. When the air permeability of the separation film meets the given range, the separation film may be enabled to have good ionic conduction performance, thus making the secondary battery have good electrochemical performance and rate capability.

Optionally, a cross direction thermal shrinkage of the separation film at 250 °C for 1 h is less than or equal to 1.0%, and optionally less than or equal to 0.4%.

Optionally, a machine direction thermal shrinkage of the separation film at 250 °C for 1 h is less than or equal to 1.0%, and optionally less than or equal to 0.3%.

Optionally, a cross direction tensile strength of the separation film is greater than or equal to 0.5 N, and optionally 1.2 N-3.5 N.

Optionally, a machine direction tensile strength of the separation film is greater than or equal to 0.5 N, and optionally 1.2 N-3.5 N.

When at least one of the cross direction tensile strength, the machine direction tensile strength, the cross direction thermal shrinkage, and the machine direction thermal shrinkage of the separation film satisfies the given range, the separation film may be enabled to have good heat resistance and physical properties, and thus, the reliability of the secondary battery can be improved.

A second aspect of the present application provides a method for preparing the separation film of the first aspect, which includes the following steps.

A first base film, a second base film and an intermediate layer slurry including filler particles are provided, where the melting point of the first base film is 175 °C or above, and the average pore size of the first base film is greater than or equal to 0.22 $\mu$m.

One of the first base film and the second base film is coated with the intermediate layer slurry and drying is performed, then the intermediate layer slurry is laminated to the other of the first base film and the second base film, and hot-pressing is performed to embed at least some of the filler particles into the first base film, thereby obtaining the separation film.

Optionally, the slurry further includes a binder.

In any embodiment of the present application, a temperature for the drying is 35 °C to 80 °C, and optionally 40 °C to 60 °C.

Optionally, a time for the drying is 5 s to 60 s, and optionally 5 s to 15 s.

Optionally, a temperature for the hot-pressing is 40 °C to 100 °C, and optionally 40 °C to 70 °C.

Optionally, a time for the hot-pressing is 5 s to 60 s, and optionally 5 s to 10 s.

Optionally, a pressure for the hot-pressing is 1 MPa to 10 MPa, and optionally 3 MPa to 7 MPa.

A third aspect of the present application provides a secondary battery, which includes a positive electrode plate, a negative electrode plate, and the separation film of the first aspect, the separation film being disposed between the positive electrode plate and the negative electrode plate.

The secondary battery according to the embodiments of the present application includes the separation film of the first aspect of the present application, and the separation film can improve the reliability of the secondary battery and can further prolong the cycle life of the secondary battery.

In any embodiment of the present application, the first base film of the separation film is oriented towards the negative electrode plate. Therefore, it is beneficial for the rapid passing of active ions (such as lithium ions), so that the lithium intercalation speed is ensured, and the uniformity of lithium intercalation is facilitated, which is beneficial to reducing the generation and growth of lithium dendrites, thereby further improving the safety performance of the battery.

A fourth aspect of the present application provides an electric device including the secondary battery of the third aspect.

The electric device of the present application includes the secondary battery according to the present application and thus has at least the same advantages as the secondary battery.

BRIEF DESCRIPTION OF THE DRAWINGS

In order to more clearly illustrate the technical solutions of the embodiments of the present application, the drawings required to be used in the embodiments of the present application are briefly described below. Apparently, the drawings in the following description illustrate merely some embodiments of the present application, and those of ordinary skills in the art may still derive other drawings from these drawings without creative efforts.

FIG. 1 is a schematic diagram of one embodiment of a secondary battery according to the present application.
FIG. 2 is an exploded schematic diagram of one embodiment of a secondary battery according to the present application.
FIG. 3 is a schematic diagram of one embodiment of a battery module according to the present application.
FIG. 4 is a schematic diagram of one embodiment of a battery pack according to the present application.
FIG. 5 is a schematic exploded view of the embodiment of the battery pack shown in FIG. 4.
FIG. 6 is a schematic diagram of one embodiment of an electric device including the secondary battery according to the present application as a power source.

The drawings are not necessarily to scale. The attached reference numerals are as follows: 1: battery pack; 2: upper case body; 3: lower case body; 4: battery module; 5: secondary battery; 51: housing; 52: electrode assembly; 53: cover plate.

DETAILED DESCRIPTION

Hereinafter, embodiments of the separation film and the preparation method therefor, the secondary battery, and the electric device of the present application are specifically disclosed in detail with appropriate reference to the drawings. However, unnecessarily detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present application and are not intended to limit the subject matter recited in the claims.

The "ranges" disclosed in the present application are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60-120 and 80-110 are listed for a particular parameter, it is understood that ranges of 60-110 and 80-120 are also anticipated. Additionally, if the minimum range values listed are 1 and 2, and the maximum range values listed are 3, 4, and 5, then the following ranges can all be anticipated: 1-3, 1-4, 1-5, 2-3, 2-4, and 2-5. In the present application, unless otherwise specified, the numerical range "a-b" indicates an abbreviated representation of any combination of real numbers between a and b, where both a and b are real numbers. For example, the numerical range "0-5" indicates that all real numbers between "0-5" are listed herein, and "0-5" is merely an abbreviated representation of a combination of these numerical values. Additionally, when stating that a parameter is an integer $\geq 2$, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions, and such technical solutions should be deemed to be included in the disclosure of the present application.

Unless otherwise specified, all technical features and optional technical features of the present application can be combined with one another to form new technical solutions, and such technical solutions should be deemed to be included in the disclosure of the present application.

Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b), and (c), or steps (a), (c), and (b), or steps (c), (a), and (b).

Unless otherwise specified, the "include" and "comprise" mentioned in the present application are openended or closed-ended. For example, the "include" and "comprise" may mean that other unlisted components may also be included or comprised or that only the listed components are included or comprised.

Unless otherwise specified, the term "or" in the present application is inclusive. For example, the phrase "A or B" means "A, B, or both A and B". More specifically, any one of the following conditions satisfies the condition "A or B": A is true (or present) and B is false (or absent); A is false (or absent) and B is true (or present); or both A and B are true (or present).

Unless otherwise specified, in the present application, the terms "first", "second", and the like are used to distinguish different objects and are not intended to describe a specific order or priority.

In the present application, the terms "a plurality of", "multiple", and the like mean two or more.

Unless otherwise specified, the terms used in the present application have the well-known meanings that are commonly understood by those skilled in the art.

Unless otherwise specified, the values of the parameters mentioned in the present application can be measured by various test methods commonly used in the art. For example, they can be measured according to the test methods given in the examples of the present application. Unless otherwise specified, all parameters are tested at 25 °C.

Unless otherwise specified, all ratio parameters referred to in the present application are all compared in the same unit. For example, the thickness of A and B is 1.2:1, where the thickness units of A and B are the same.

## Separation Film

In general, a secondary battery includes an electrode assembly including a positive electrode plate, a negative electrode plate, and a separation film disposed between the positive electrode plate and the negative electrode plate, and an electrolyte, and the separation film mainly functions to prevent the positive electrode and the negative electrode from being short-circuited.

Embodiments of the present application provide a separation film including a first base film, a second base film, and an intermediate layer located between the first base film and the second base film. Where the first base film has a melting point of 175 °C or above and an average pore size of greater than or equal to 0.22 $\mu$m. The intermediate layer includes filler particles, at least some of the filler particles being embedded into the first base film.

The current commercial secondary batteries usually adopt a polyolefin porous film as a separation film, which has poor heat resistance and undergoes a significant thermal pinch effect when heated, causing direct contact between the positive and negative electrodes inside the battery and leading to internal short circuits, thereby increasing the safety risks of the secondary batteries. Compared with the polyolefin porous film, the first base film having a melting point of 175 °C or above can effectively improve the heat resistance of the separation film. However, the first base film having a high melting point generally has low mechanical strength and self-supporting properties, and may be difficult to meet the requirements for processing, transportation and use of the secondary batteries, resulting in a decrease in the production yield and reliability of the secondary batteries.

Without intending to be bound by any theory or explanation, when the separation film includes the first base film, the second base film, and the intermediate layer located between the first base film and the second base film, the separation film can be made to have good heat resistance, high mechanical strength, and self-supporting properties. Specifically, the first base film has a melting point of 175 °C or above, which can provide good heat resistance for the separation film. Furthermore, the average pore size of the first base film is within the above appropriate range, such that an appropriate amount of filler particles can be embedded into the first base film to form a composite structure of the first base film and the filler particles, and thus the mechanical strength, the self-supporting properties and the heat resistance of the separation film can be effectively improved. In addition, the overall thickness of the separation film can be reduced by the embedding of the filler particles into the base film, thereby further improving the energy density of the battery; also, the filler particles can be better embedded into the first base film due to the specific pore size range, such that the probability of powder falling of the filler particles in the intermediate layer is reduced, thereby further improving the reliability of the separation film, and improving the cycle performance of the battery.

Therefore, the separation film according to the present application can enable the secondary battery to simultaneously have better safety performance, higher energy density and good cycle performance.

In some embodiments, the first base film may have an average pore size of 0.22 $\mu$m-4.0 $\mu$m, for example, 0.22 $\mu$m, 0.3 $\mu$m, 0.5 $\mu$m, 0.8 $\mu$m, 1.0 $\mu$m, 1.2 $\mu$m, 1.5 $\mu$m, 1.8 $\mu$m, 2.0 $\mu$m, 2.5 $\mu$m, 2.7 $\mu$m, 3.0 $\mu$m, 3.5 $\mu$m, 4.0 $\mu$m, or a range consisting of any two of the foregoing numerical values. For example, the first base film may have an average pore size of 0.22 $\mu$m-3.5 $\mu$m, 0.22 $\mu$m-2.7 $\mu$m, 0.22 $\mu$m-2.5 $\mu$m, 0.22 $\mu$m-2.0 $\mu$m, 0.22 $\mu$m-1.8 $\mu$m, 0.22 $\mu$m-1.5 $\mu$m, 0.22 $\mu$m-1.0 $\mu$m, 0.22 $\mu$m-0.5 $\mu$m, 0.3 $\mu$m-4.0 $\mu$m, 0.3 $\mu$m-3.5 $\mu$m, 0.3 $\mu$m-2.7 $\mu$m, 0.3 $\mu$m-2.5 $\mu$m, 0.3 $\mu$m-2.0 $\mu$m, 0.3 $\mu$m-1.8 $\mu$m, 0.3 $\mu$m-1.5 $\mu$m, 0.3 $\mu$m-1.0 $\mu$m, 0.3 $\mu$m-0.5 $\mu$m, 0.5 $\mu$m-4.0 $\mu$m, 0.5 $\mu$m-3.5 $\mu$m, 0.5 $\mu$m-2.7 $\mu$m, 0.5 $\mu$m-2.5 $\mu$m, 0.5 $\mu$m-2.0 $\mu$m, 0.5 $\mu$m-1.8 $\mu$m, 0.5 $\mu$m-1.5 $\mu$m, 0.5 $\mu$m-1.0 $\mu$m, 0.8 $\mu$m-4.0 $\mu$m, 0.8 $\mu$m-3.5 $\mu$m, 0.8 $\mu$m-2.7 $\mu$m, 0.8 $\mu$m-2.5 $\mu$m, 0.8

μm-2.0 μm, 0.8 μm-1.8 μm, 0.8 μm-1.5 μm, 1.0 μm-4.0 μm, 1.0 μm-3.5 μm, 1.0 μm-2.7 μm, 1.0 μm-2.5 μm, 1.0 μm-2.0 μm, 1.0 μm-1.8 μm, 1.0 μm-1.5 μm, 1.2 μm-4.0 μm, 1.2 μm-3.5 μm, 1.2 μm-2.7 μm, 1.2 μm-2.5 μm, 1.2 μm-2.0 μm, 1.2 μm-1.8 μm, 1.2 μm-1.5 μm, 1.5 μm-4.0 μm, 1.5 μm-3.5 μm, 1.5 μm-2.7 μm, 1.5 μm-2.5 μm, or 1.5 μm-2.0 μm.

Without intending to be bound by any theory or explanation, as the average pore size of the first base film is adjusted to satisfy the above range, embedding of the filler particles into the first base film is facilitated to form a suitable composite structure separation film, thereby allowing the separation film to have excellent air permeability and higher strength while having a small thickness. As a result, the application of the separation film to the secondary battery is conducive to improving the energy density and the cycle performance of the secondary battery.

In some embodiments, the average pore size of the second base film is smaller than the average pore size of the first base film.

Optionally, in some embodiments, the average pore size of the second base film may be 0.01 μm-0.5 μm, 0.01 μm-0.4 μm, 0.01 μm-0.3 μm, 0.01 μm-0.2 μm, 0.01 μm-0.1 μm, 0.02 μm-0.5 μm, 0.02 μm-0.4 μm, 0.02 μm-0.3 μm, 0.02 μm-0.2 μm, 0.02 μm-0.1 μm, 0.03 μm-0.1 μm, 0.04 μm-0.1 μm, or 0.05 μm-0.1 μm.

Without intending to be bound by any theory or explanation, as the average pore size of the second base film is adjusted to satisfy the above range, the second base film can be enabled to have high mechanical strength, high puncture strength and proper permeability. Therefore, in one aspect, the mechanical strength of the separation film can be improved through the second base film, such that the structural stability of the separation film is improved, and the risk of the separation film being pierced by lithium dendrites and leading to a short circuit caused by the contact between the positive electrode and the negative electrode is reduced; in another aspect, the permeability of the separation film can be adjusted through the second base film, such that the separation film has good barrier property, and the risk of short circuit caused by the direct contact between the positive electrode and the negative electrode is reduced. Therefore, the application of the separation film of the above embodiment to a secondary battery can further improve the reliability of the secondary battery.

The average pore size of the base film has a meaning well known in the art and can be determined using equipment and methods known in the art. For example, the test can be performed by a mercury intrusion instrument with reference to the test standard GB/T 21650-2008.

In some embodiments, the filler particles may be embedded into the first base film to a depth of greater than or equal to 0.2 μm, for example, 0.2 μm, 0.3 μm, 0.5 μm, 0.8 μm, 1.0 μm, 1.1 μm, 1.3 μm, 1.5 μm, 1.8 μm, 2.0 μm, or a range consisting of any two of the foregoing numerical values.

Optionally, in some embodiments, the filler particles may further be embedded into the first base film to a depth of 0.5 μm-1.0 μm, for example, 0.5 μm, 0.6 μm, 0.7 μm, 0.8 μm, 0.9 μm, 1.0 μm, or a range consisting of any two of the foregoing numerical values.

Without intending to be bound by any theory or explanation, when the filler particles are embedded into the first base film to a depth satisfying the above range, the mechanical strength and the self-supporting properties of the composite structure formed by the filler particles and the first base film can be effectively improved. Therefore, the structural stability of the separation film is further improved, which in turn is conducive to improving the reliability of the secondary battery. In addition, when the filler particles are embedded into the first base film to a depth satisfying the above range, it is advantageous to further reducing the overall thickness of the separation film, thereby further improving the energy density of the battery.

In some embodiments, the filler particles may be embedded into the second base film to a depth of greater than or equal to 0.1 μm, for example, 0.1 μm, 0.2 μm, 0.3 μm, 0.4 μm, 0.5 μm, 0.6 μm, 0.7 μm, 0.8 μm, or a range consisting of any two of the foregoing numerical values.

Optionally, in some embodiments, the filler particles may be embedded into the second base film to a depth of 0.1 μm-0.5 μm, for example, 0.1 μm, 0.15 μm, 0.2 μm, 0.25 μm, 0.3 μm, 0.35 μm, 0.4 μm, 0.45 μm, 0.5 μm, or a range consisting of any two of the foregoing numerical values.

Without intending to be bound by any theory or explanation, when the filler particles are embedded into the second base film to a depth satisfying the above range, it is possible to allow a suitable bonding force between the intermediate layer and the second base film in one aspect, thereby improving the structural stability of the separation film; in another aspect, the second base film can maintain proper air permeability and support properties, such that the separation film has good air permeability and strength. Therefore, the safety performance and the electrochemical performance of the secondary battery are further advantageously improved.

In some embodiments, the filler particles may be embedded into a greater depth in the first base film than in the second base film.

Without intending to be bound by any theory or explanation, the filler particles are embedded into a greater depth in the first base film than in the second base film, which can provide the separation film with high structural stability and good air permeability, so that the reliability and electrochemical performance of the secondary battery can be improved.

The depth of embedding of the filler particles into the base film is a meaning well known in the art and can be tested using equipment and methods known in the art. For example, testing can be performed by using a scanning electron microscope (e.g., ZEISS Sigma 300). As an example, the following steps may be followed: firstly, a separation film is cut into a sample to be tested with a certain size (such as 6 mm × 6 mm), the sample to be tested is clamped by using two sheets (such as copper foils) with electric and heat conduction, the sample to be tested and the sheets with glue (such as double-sided adhesive) are stuck and fixed, and then pressed with a flat iron block of a certain mass (such as about 400 g) for a certain time (such as 1 h) to ensure the gap between the sample to be tested and the copper foils as small as possible, then the edges are trimmed by using scissors, and the edges are stuck onto a sample stage with conductive adhesive, where the sample slightly protrudes from the edges of the sample stage. Then, the sample stage is loaded into a sample holder, the sample holder is locked and fixed, an argon ion cross section polishing instrument (such as IB-19500CP) is turned on and vacuum pumping (such as 10 Pa-4 Pa) is carried out, and with argon flow (such as 0.15 MPa), voltage (such as 8 KV) and polishing time (such as 2 hours) being set, the sample stage is adjusted to be in a swing mode to start polishing; after polishing is finished, an ion polishing section morphology (CP) picture of the sample to be tested is obtained by a scanning electron microscope (such as ZEISS Sigma 300), and thickness data of the base film and the intermediate layer are measured respectively; and an EDS Mapping mode is selected, and the distribution depth of elements (such as aluminum) contained in the filler particles in the base film is tested as the depth of embedding. For example, with the middle point of the element distribution curve as a boundary, the thickness of the intermediate layer may be substituted, and the value of the thickness of the intermediate layer on both sides of the middle line is removed, the value at which is the initial value; and the value is extended to the point where the content of elements (e.g., aluminum) contained in the filled particles is 0 to read the value, which is the depth of embedding.

In some embodiments, the melting point of the first base film may be greater than or equal to a melting point of the second base film.

In some embodiments, the melting point of first base film may be 175 °C to 350 °C, for example, 175 °C, 200 °C, 225 °C, 250 °C, 275 °C, 300 °C, 325 °C, 350 °C, or a range consisting of any two of the foregoing numerical values.

Optionally, in some embodiments, the melting point of the first base film may also be 220 °C to 350 °C, for example, 220 °C, 230 °C, 240 °C, 250 °C, 260 °C, 270 °C, 280 °C, 290 °C, 300 °C, 310 °C, 320 °C, 330 °C, 340 °C, 350 °C, or a range consisting of any two of the foregoing numerical values.

In some embodiments, the melting point of the second base film may be 130 °C to 200 °C, for example, 130 °C, 140 °C, 150 °C, 160 °C, 170 °C, 180 °C, 190 °C, 200 °C, or a range consisting of any two of the foregoing numerical values.

Optionally, in some embodiments, the melting point of the second base film may be 135 °C to 180 °C, for example, 220 °C, 230 °C, 240 °C, 250 °C, 260 °C, 270 °C, 280 °C, 290 °C, 300 °C, 310 °C, 320 °C, 330 °C, 340 °C, 350 °C, or a range consisting of any two of the foregoing numerical values.

Without intending to be bound by any theory or explanation, when the melting point of the first base film and/or the second base film is adjusted to fall within the appropriate range above, not only can the separation film be made to have good heat resistance, but the separation film can also be allowed to have good pore-closing characteristics. Therefore, the separation film not only has good ionic conductivity in the case of normal operation of the secondary battery, but also can close the pores in time when the thermal runaway of the secondary battery occurs so as to block the conduction of current. This makes it possible to achieve both good cycle performance and high reliability of the secondary battery.

The melting point of the base film has a meaning well known in the art and can be determined using equipment and methods known in the art. For example, it can be determined by differential scanning calorimetry. Reference may be made in particular to the standard GB/T 19466.3-2004. As an example, it can be determined according to the following method: taking 4 mg-6 mg of a sample to be tested, placing the sample in a sample chamber of a differential scanning calorimeter, heating the sample from 25 °C to 400 °C at a heating rate of 10 °C/min to obtain a melting endothermic curve of the sample, where the temperature corresponding to the peak value of the curve is the melting point of the sample.

In some embodiments, the machine direction elongation at break of the first base film may be 20% to 105%, for example, 20%, 30%, 40%, 50%, 60%, 70%, 80%, 90%, 100%, 105%, or a range consisting of any two of the foregoing numerical values.

Optionally, in some embodiments, the machine direction elongation at break of the first base film may further be 40% to 90%, for example, 40%, 45%, 50%, 55%, 60%, 65%, 70%, 75%, 80%, 85%, 90%, or a range consisting of any two of the foregoing numerical values.

In some embodiments, the cross direction elongation at break of the first base film may be 20% to 105%, for example, 20%, 30%, 40%, 50%, 60%, 70%, 80%, 90%, 100%, 105%, or a range consisting of any two of the foregoing numerical values.

Optionally, in some embodiments, the cross direction elongation at break of the first base film may further be 40% to 90%, for example, 40%, 45%, 50%, 55%, 60%, 65%, 70%, 75%, 80%, 85%, 90%, or a range consisting of any two of the foregoing numerical values.

Without intending to be bound by any theory or explanation, the larger the average pore size of the first base film, the smaller its machine direction elongation at break and/or cross direction elongation at break, when the other intrinsic parameters of the first base film are substantially the same. When the machine direction elongation at break and/or the cross direction elongation at break of the first base film are/is adjusted to satisfy the above ranges, the first base film is facilitated to have a suitable average pore size, thereby facilitating the filler particles to be embedded into the first base film to form a suitable composite structure. As a result, it is beneficial to improving the heat resistance and mechanical strength of the separation film, which in turn is beneficial to improving the reliability of the secondary battery.

The cross direction elongation at break and the machine direction elongation at break of the first base film each have a meaning well known in the art and can be measured using equipment and methods known in the art. For example, all the test may be performed with reference to standard GB/T 36363-2018.

In some embodiments, the machine direction elongation at break of the second base film is less than the cross direction elongation at break of the second base film.

The machine direction elongation at break of the second base film may be greater than or equal to 40%, for example, 40%, 50%, 60%, 70%, 80%, 90%, 100%, 110%, 120%, 130%, 140%, 150%, 160%, 170%, 180%, or a range consisting of any two of the foregoing numerical values.

Optionally, in some embodiments, the machine direction elongation at break of the second base film may be 60% to 150%, for example, 60%, 70%, 80%, 90%, 100%, 110%, 120%, 130%, 140%, 150%, or a range consisting of any two of the foregoing numerical values.

The cross direction elongation at break of the second base film may be greater than or equal to 60%, for example, 60%, 70%, 80%, 90%, 100%, 110%, 120%, 130%, 140%, 150%, 160%, 170%, 180%, 190%, 200%, or a range consisting of any two of the foregoing numerical values.

Optionally, in some embodiments, the cross direction elongation at break of the second base film may be 80% to 160%, for example, 80%, 90%, 100%, 110%, 120%, 130%, 140%, 150%, 160%, or a range consisting of any two of the foregoing numerical values.

Without intending to be bound by any theory or explanation, it is advantageous to improving the elongation property of the separation film through the second base film by adjusting the machine direction elongation at break and/or the cross direction elongation at break of the second base film to satisfy the above range, thereby improving the processability of the separation film. Therefore, it is advantageous for the separation film to have both good processability and high heat resistance, and thus the production yield and reliability of the secondary battery are favorably improved.

The method for testing the machine direction elongation at break and/or the cross direction elongation at break of the second base film may refer to the method for testing the machine direction elongation at break and/or the cross direction elongation at break of the first base film.

In some embodiments, the porosity of the first base film may be greater than the porosity of the second base film.

Optionally, in some embodiments, the porosity of the first base film may be 30% to 98%, for example, 30%, 40%, 50%, 60%, 70%, 80%, 90%, 95%, 98%, or a range consisting of any two of the foregoing numerical values.

Optionally, in some embodiments, the porosity of the second base film may be 20% to 60%, for example, 20%, 25%, 30%, 35%, 40%, 45%, 50%, 55%, 60%, or a range consisting of any two of the foregoing numerical values.

Without intending to be bound by any theory or explanation, when the porosity of the first base film is greater than the porosity of the second base film, the porosities of the first base film and the second base film may be complementary, such that the porosity of the separation film is within an appropriate range, thereby enabling the separation film to have good permeability and infiltration performance in the electrolytic solution, and thus further improving the electrochemical performance and rate capability of the secondary battery. Furthermore, by adjusting the porosity of the first base film within the above appropriate range, it is possible to make an appropriate amount of the filler particles embedded into the first base film, thereby not only facilitating adjustment of the mechanical strength of the separation film but also enabling the separation film to have good air permeability. Therefore, the separation film according to the embodiments of the present application not only has high reliability, but also has good ionic conduction performance, and when applied to a secondary battery, can improve the reliability, electrochemical performance and rate capability of the secondary battery. The porosity of the second base film is adjusted to meet the given range, such that the porosity of the separation film can be adjusted to be in a proper range, allowing the separation film to have good permeability and infiltration performance in the electrolytic solution, and thus further improving the electrochemical performance and the rate capability of the secondary battery.

The porosity of the base film has a meaning well known in the art and can be determined using equipment and methods known in the art. For example, the test can be performed by a mercury intrusion instrument with reference to the test standard GB/T 21650-2008.

In some embodiments, the relative molecular mass of the first base film may be greater than the relative molecular mass of the second base film.

Optionally, in some embodiments, the relative molecular mass of the first base film may be 300,000 to 6,000,000, for example, 300,000, 500,000, 800,000, 1,000,000, 2,000,000, 3,000,000, 4,000,000, 5,000,000, 6,000,000, or a range consisting of any two of the foregoing numerical values.

More optionally, in some embodiments, the relative molecular mass of the first base film may also be 1,000,000 to 3,000,000, for example, 1,000,000, 1,200,000, 1,500,000, 1,800,000, 2,000,000, 2,200,000, 2,500,000, 2,800,000, 3,000,000, or a range consisting of any two of the foregoing numerical values.

Optionally, in some embodiments, the relative molecular mass of the second base film may be 100,000 to 3,000,000, for example, 100,000, 500,000, 800,000, 1,000,000, 1,500,000, 2,000,000, 1,500,000, 3,000,000, or a range consisting of any two of the foregoing numerical values.

More optionally, in some embodiments, the relative molecular mass of the second base film may also be 400,000 to 1,500,000, for example, 400,000, 600,000, 800,000, 1,000,000, 1,200,000, 1,400,000, 1,500,000, or a range consisting of any two of the foregoing numerical values.

Without intending to be bound by any theory or explanation, as the relative molecular mass of the first base film and/or the second base film is adjusted to satisfy the above range, the melting point of the first base film and/or the second base film can be adjusted to satisfy the range of the embodiments of the present application, thereby contributing to the improvement of the heat resistance of the separation film, thus improving the reliability of the secondary battery.

The relative molecular mass of the base film has a meaning well known in the art and can be tested using equipment and methods known in the art. For example, the testing is carried out by using a high temperature GPC test (differential refractometer).

In some embodiments, the ratio of the thickness of the first base film to the thickness of the second base film may be 0.15 to 2.0, for example, 0.15, 0.3, 0.5, 1.0, 1.2, 1.5, 1.8, 2.0, or a range consisting of any two of the foregoing numerical values.

Optionally, in some embodiments, the ratio of the thickness of the first base film to the thickness of the second base film may also be 0.3 to 0.6, for example, 0.3, 0.35, 0.4, 0.45, 0.5, 0.55, 0.6, or a range consisting of any two of the foregoing numerical values.

In some embodiments, the thickness of the first base film may be 1 $\mu$m-10 $\mu$m, for example, 1 $\mu$m, 2 $\mu$m, 3 $\mu$m, 4 $\mu$m, 5 $\mu$m, 6 $\mu$m, 7 $\mu$m, 8 $\mu$m, 9 $\mu$m, 10 $\mu$m, or a range consisting of any two of the foregoing numerical values.

Optionally, in some embodiments, the thickness of the first base film may also be 1 $\mu$m-3 $\mu$m, for example, 1 $\mu$m, 1.5 $\mu$m, 2 $\mu$m, 2.5 $\mu$m, 3 $\mu$m, or a range consisting of any two of the foregoing numerical values.

In some embodiments, the thickness of the second base film may be 2 $\mu$m-10 $\mu$m, for example, 2 $\mu$m, 3 $\mu$m, 4 $\mu$m, 5 $\mu$m, 6 $\mu$m, 7 $\mu$m, 8 $\mu$m, 9 $\mu$m, 10 $\mu$m, or a range consisting of any two of the foregoing numerical values.

Optionally, in some embodiments, the thickness of the second base film may be 3 $\mu$m-6 $\mu$m, for example, 3 $\mu$m, 4 $\mu$m, 5 $\mu$m, 6 $\mu$m, or a range consisting of any two of the foregoing numerical values.

Without intending to be bound by any theory or explanation, when the thickness of the first base film and/or the second base film satisfies the above conditions, the separation film can be made to have a smaller thickness while having a higher mechanical strength, thereby facilitating the secondary battery to have both high reliability and high energy density.

The thickness of the base film has a meaning well known in the art and can be determined using equipment and methods known in the art. For example, it can be determined by taking six sets of parallel samples and measuring the thickness of each set of samples at different positions by a micrometer thickness gauge; at least 20 positions can be measured for each set of samples, and the average value of the thicknesses of the six sets of samples can be taken as the thickness of the sample.

In some embodiments, the air permeability of the first base film may be less than the air permeability of the second base film.

Optionally, in some embodiments, the ratio of the air permeability of the first base film to the air permeability of the second base film may be 0.1 to 0.5, 0.1 to 0.4, 0.1 to 0.3, 0.1 to 0.2, 0.2 to 0.5, 0.2 to 0.4, 0.2 to 0.3, 0.3 to 0.5, 0.3 to 0.4, or 0.4 to 0.5.

In some embodiments, the air permeability of the first base film may be 20 sec/100 cc-100 sec/100 cc, for example, 20 sec/100 cc, 30 sec/100 cc, 40 sec/100 cc, 50 sec/100 cc, 60 sec/100 cc, 70 sec/100 cc, 80 sec/100 cc, 90 sec/100 cc, 100 sec/100 cc, or a range consisting of any two of the foregoing numerical values.

Optionally, in some embodiments, the air permeability of the first base film may further be 30 sec/100 cc-40 sec/100 cc, for example, 30 sec/100 cc, 32 sec/100 cc, 34 sec/100 cc, 36 sec/100 cc, 38 sec/100 cc, 40 sec/100 cc, or a range consisting of any two of the foregoing numerical values.

In some embodiments, the air permeability of the second base film may be 100 sec/100 cc-300 sec/100 cc, for example, 100 sec/100 cc, 150 sec/100 cc, 200 sec/100 cc, 250 sec/100 cc, 300 sec/100 cc, or a range consisting of any two of the foregoing numerical values.

Optionally, in some embodiments, the air permeability of the second base film may further be 100 sec/100 cc-150 sec/100 cc, for example, 100 sec/100 cc, 110 sec/100 cc, 120 sec/100 cc, 130 sec/100 cc, 140 sec/100 cc, 150 sec/100 cc, or a range consisting of any two of the foregoing numerical values.

Without intending to be bound by any theory or explanation, the first base film typically has a lower air permeability when the average pore size of the first base film satisfies the range according to the embodiments of the present application. As the air permeability of the first base film and/or the second base film is adjusted to satisfy the above range, the air permeability of the first base film and the second base film can complement each other, such that the separation film has a suitable air permeability to make the separation film have good ionic conduction performance, and thus the electrochemical and rate capability of the secondary battery can be improved.

The air permeability of the base film has a meaning well known in the art and can be measured using equipment and methods known in the art. For example, the test may be performed with reference to the standard GB/T 36363-2018.

In some embodiments, the puncture strength of the first base film may be less than the puncture strength of the second base film. For example, the ratio of the puncture strength of the first base film to the puncture strength of the second base film may be 0.05, 0.1, 0.2, 0.3, 0.4, 0.5, 0.6, 0.7, 0.8, 0.9, 0.95, 0.98, 0.99, or a range consisting of any two of the foregoing numerical values.

In some embodiments, the puncture strength of the first base film may be 20 gf to 150 gf, for example, 20 gf, 40 gf, 60 gf, 80 gf, 100 gf, 120 gf, 150 gf, or a range consisting of any two of the foregoing numerical values.

Optionally, in some embodiments, the puncture strength of the first base film may further be 20 gf to 80 gf, for example, 20 gf, 30 gf, 40 gf, 50 gf, 60 gf, 70 gf, 80 gf, or a range consisting of any two of the foregoing numerical values.

In some embodiments, the puncture strength of the second base film may be 60 gf to 400 gf, for example, 60 gf, 100 gf, 150 gf, 200 gf, 250 gf, 300 gf, 350 gf, 400 gf, or a range consisting of any two of the foregoing numerical values.

Optionally, in some embodiments, the puncture strength of the second base film may further be 80 gf to 270 gf, for example, 80 gf, 100 gf, 120 gf, 150 gf, 180 gf, 200 gf, 220 gf, 250 gf, 270 gf, or a range consisting of any two of the foregoing numerical values.

The puncture strength of the first base film and/or the second base film is adjusted to meet the above conditions, such that the risk of the separation film being punctured by lithium dendrites or under mechanical impact is reduced, and thus the reliability of the secondary battery is further improved.

The puncture strength of the base film has the meaning well known in the art and can be determined using equipment and methods known in the art. For example, the test may be performed with reference to GB/T 10004-2008. Specifically, the base film may be cut into strips to obtain test pieces, the width of which may be 100 mm. The test pieces with the width of 100 mm are mounted on a sample film fixing clamp ring, then a steel needle with a diameter of 1.0 mm and a radius of the tip of the diameter of 0.5 mm is used for thrusting the test pieces at a speed of $(50 \pm 5)$ mm/min, and the maximum load of the steel needle penetrating the test pieces is read. More than 5 sets of parallel samples can be taken, each set of samples is randomly tested for 3 points, and the arithmetic mean value of the puncture strength of all the parallel samples is taken as the puncture strength of the base film.

In some embodiments, the material of the first base film includes at least one of polytetrafluoroethylene (PTFE) and derivatives thereof, polyethylene terephthalate (PET) and derivatives thereof, polyimide (PI) and derivatives thereof, polyetheretherketone (PEEK) and derivatives thereof, polyphenylene sulfide (PPS) and derivatives thereof, polybenzimidazole (PBI) and derivatives thereof, polysulfone (PSF) and derivatives thereof, and polylactic acid (PLA) and derivatives thereof.

Optionally, in some embodiments, the first base film includes polytetrafluoroethylene or a derivative of polytetrafluoroethylene.

Derivatives usually refer to products derived from the replacement of hydrogen atoms or atomic groups in a polymer by other atoms or atomic groups.

Without intending to be bound by any theory or explanation, the material of the first base film is selected from the above suitable materials, which is beneficial for the first base film to have a high melting point, thereby being beneficial for improving the heat resistance of the separation film, and further being beneficial for improving the reliability of the secondary battery. In particular, when the first base film is a PTFE base film, in the case of thermal runaway of the secondary battery, even if the PTFE base film is melted due to the internal temperature of the battery being higher than the melting point of the PTFE base film, the PTFE base film would not be melted through or undergo a significant shrinkage phenomenon, thereby allowing the separation film to have high structural stability. As a result, the separation film can effectively obstruct the contact of the positive and negative electrodes in the event of thermal runaway in the secondary battery, which can further improve the reliability of the secondary battery and reduce the probability of safety accidents such as fire and explosion of the secondary battery.

In some embodiments, the material of the second base film may include at least one of polyolefin, halogenated polyolefin, polyether, polyester, polyvinyl alcohol, polytetrafluoroethylene and derivatives thereof, polyethylene terephthalate and derivatives thereof, polyimide and derivatives thereof, polyetheretherketone and derivatives thereof, polyphenylene sulfide and derivatives thereof, polybenzimidazole and derivatives thereof, and polysulfone and derivatives thereof.

The material of the second base film is selected from the above suitable substances, which is beneficial for the second base film to be better complementary to the first base film, thereby enabling the separation film to have both good heat resistance and high structural stability. As a result, the reliability of the secondary battery can be further improved, and the probability of safety accidents such as fire and explosion of the secondary battery is reduced.

In some embodiments, the volume distribution particle size Dv50 of the filler particles may be 0.01 μm-0.8 μm, for example, 0.01 μm, 0.05 μm, 0.1 μm, 0.2 μm, 0.3 μm, 0.4 μm, 0.5 μm, 0.6 μm, 0.7 μm, 0.8 μm, or a range consisting of any two of the foregoing numerical values.

Optionally, in some embodiments, the volume distribution particle size Dv50 of the filler particles may further be 0.2 μm-0.8 μm, for example, 0.2 μm, 0.25 μm, 0.3 μm, 0.35 μm, 0.4 μm, 0.45 μm, 0.5 μm, 0.55 μm, 0.6 μm, 0.65 μm, 0.7 μm, 0.75 μm, 0.8 μm, or a range consisting of any two of the foregoing numerical values.

Without intending to be bound by any theory or explanation, when the volume distribution particle size Dv50 of the filler particles satisfies the above range, it can be better matched with the pore structure of the surface of the first base film, thereby forming a suitable composite structure with the first base film. Therefore, it is beneficial to improving the mechanical strength, the self-supporting properties and the heat resistance of the separation film, which in turn is beneficial to improving the reliability of the secondary battery.

The volume distribution particle size Dv50 of the filler particles has a meaning well known in the art and may represent a particle size corresponding to 50% of the cumulative particle size distribution percentage of the filler particles in the volume-based particle size distribution. The volume distribution particle size Dv50 can be determined using equipment and methods known in the art. For example, it may be determined by a laser particle size analyzer (e.g. Mastersizer 2000E, Malvern, UK) with reference to the GB/T 19077-2016 particle size distribution laser diffraction method.

In some embodiments, a specific surface area of the filler particles may be 2 g/m$^2$ to 20 g/m$^2$, for example, 2 g/m$^2$, 5 g/m$^2$, 8 g/m$^2$, 10 g/m$^2$, 12 g/m$^2$, 15 g/m$^2$, 18 g/m$^2$, 20 g/m$^2$, or a range consisting of any two of the foregoing numerical values.

Optionally, in some embodiments, the specific surface area of the filler particles may further be 6 g/m$^2$-9 g/m$^2$, for example, 6 g/m$^2$, 7 g/m$^2$, 8 g/m$^2$, 9 g/m$^2$, 10 g/m$^2$, or a range consisting of any two of the foregoing numerical values.

Without intending to be bound by any theory or explanation, by adjusting the specific surface area of the filler particles within the above suitable range, not only can a suitable composite structure be formed by the filler particles and the first base film, thereby improving the mechanical strength, self-supporting properties and heat resistance of the separation film, but also the infiltration performance of the separation film in the electrolytic solution is advantageously improved, thereby advantageously reducing the internal resistance of the secondary battery, improving the cycle performance of the secondary battery, and prolonging the cycle life of the secondary battery.

The specific surface area of the filler particles has a meaning well known in the art and can be determined by methods known in the art. The specific surface area of the filler particles can be measured by a nitrogen adsorption/desorption method using a specific surface area analyzer (e.g., TristarII3020M), for example.

In some embodiments, the filler may include at least one of inorganic particles, organic particles, and organo-metallic framework materials.

Optionally, the inorganic particles may include one or more of inorganic particles having a dielectric constant of 5 or more, inorganic particles having ion conductivity but not storing ions, and inorganic particles capable of undergoing electrochemical reactions.

Optionally, the organic particles may include one or more of polycarbonate, polythiophene, polypyridine, polystyrene, polyacrylic wax, polyethylene, polypropylene, cellulose, cellulose modifiers (e.g., carboxymethyl cellulose), melamine resins, phenolic resins, polyesters (e.g., polyethylene terephthalate, polyethylene naphthalate, and polybutylene terephthalate), silicone resins, polyimides, polyamideimides, polyaramides, polyphenylene sulfides, polysulfones, polyether sulfones, polyether etherketones, polyaryletherketones, and copolymers of butyl acrylate and ethyl methacrylate (e.g., cross-linked polymers of butyl acrylate and ethyl methacrylate).

Optionally, the organo-metallic framework materials may include one or more of a nitrogen-containing heterocyclic ligand building structure, an organic carboxylic ligand building structure, and a nitrogen-oxygen-containing mixed ligand building structure.

In some embodiments, the intermediate layer may further include a binder. The binder can provide the separation film with good heat resistance and improve the reliability of the secondary battery on the basis of ensuring the adhesion strength and uniformity of the first base film and the second base film.

In some embodiments, the binder may include one or more of polyacrylate, polyacrylic acid, polyimide, polytetrafluoroethylene, polyvinylidene fluoride, vinylidene fluoride-trichloroethylene copolymer, polyvinylpyrrolidone, polyvinyl acetate, ethylene-vinyl acetate copolymer, polyethylene oxide, polyarylate, carboxymethyl cellulose, hydroxypropyl cellulose, regenerated cellulose, cellulose acetate, cellulose acetate propionate, cellulose acetate butyrate, polyacrylonitrile, polyvinyl alcohol, polyethylene, polypropylene, starch, cyanoethyl amylopectin, thermoplastic polyurethane, maleic anhydride, and ethylene-acrylic acid copolymer.

In some embodiments, the filler particles may be present in an amount of less than or equal to 90%, and optionally 20%-80%, based on the total mass of the intermediate layer.

In some embodiments, the binder may be present in an amount of less than or equal to 35%, and optionally 10%-30%, based on the total mass of the intermediate layer.

In some embodiments, the intermediate layer may further include a dispersant, such as carboxymethyl cellulose, whereby the viscosity of the viscous intermediate layer slurry may be adjusted to improve the quality and uniformity of the film layer.

In some embodiments, the thickness of the separation film may be less than or equal to 7 μm. Optionally, in some embodiments, the thickness of the separation film may be 3 μm-6 μm. The thickness of the separation film falling within the given range is advantageous for further improving the energy density of the secondary battery.

The method for testing the thickness of the separation film may refer to the method for testing the thickness of the base film.

In some embodiments, the air permeability of the separation film may be 100 sec/100 cc-300 sec/100 cc, and optionally 120 sec/100 cc-200 sec/100 cc.When the air permeability of the separation film meets the given range, the separation film may be enabled to have good ionic conduction performance, thus making the secondary battery have good electrochemical performance and rate capability.

The method for testing the air permeability of the separation film may refer to the method for testing the air permeability of the base film.

In some embodiments, the cross direction thermal shrinkage of the separation film at 250 °C for 1 h may be less than or equal to 1.0%, and optionally less than or equal to 0.4%.

In some embodiments, the machine direction thermal shrinkage of the separation film at 250 °C for 1 h may be less than or equal to 1.0%, and optionally less than or equal to 0.3%.

In some embodiments, a cross direction tensile strength of the separation film may be greater than or equal to 0.5 N, and optionally 1.2 N-3.5 N.

In some embodiments, a machine direction tensile strength of the separation film may be greater than or equal to 0.5 N, and optionally 1.2 N-3.5 N.

When at least one of the cross direction tensile strength, the machine direction tensile strength, the cross direction thermal shrinkage, and the machine direction thermal shrinkage of the separation film satisfies the given range, the separation film may be enabled to have good heat resistance and physical properties, and thus, the reliability of the secondary battery can be improved.

The cross direction thermal shrinkage, the machine direction thermal shrinkage, the cross direction tensile strength, and the machine direction tensile strength of the separation film may all have meanings well known in the art, and may be measured by methods known in the art. For example, all the test may be performed with reference to the standard GB/T 36363-2018.

## Preparation method

The embodiments of the present application further provide a method for preparing the separation film according to the embodiments of the present application.

The method includes the following steps: providing a first base film, a second base film, and an intermediate layer slurry including filler particles, where a melting point of the first base film is 175 °C or above, and an average pore size of the first base film is greater than or equal to 0.22 $\mu$m; and coating one of the first base film and the second base film with the intermediate layer slurry and drying, followed by laminating the intermediate layer slurry to the other of the first base film and the second base film, and hot-pressing to embed at least some of the filler particles into the first base film, thereby obtaining the separation film. Optionally, the slurry further includes a binder.

In some embodiments, a temperature for the drying may be 35 °C to 80 °C, 35 °C to 70 °C, 35 °C to 60 °C, 35 °C to 50 °C, 40 °C to 70 °C, 40 °C to 60 °C, 40 °C to 50 °C, 50 °C to 80 °C, 50 °C to 70 °C, 50 °C to 60 °C, or 60 °C to 80 °C.

In some embodiments, the drying time may be 5 s-60 s, 5 s-45 s, 5 s-30 s, 5 s-15 s, 15 s-60 s, 15 s-45 s, or 15 s-30 s.

In some embodiments, a temperature for the hot-pressing may be 40 °C to 100 °C, 40°C to 85°C, 40 °C to 70 °C, 40 °C to 60 °C, 50 °C to 100 °C, 50 °C to 85 °C, or 50 °C to 70 °C.

In some embodiments, a time for the hot-pressing may be 5 s-60 s, 5 s-40 s, 5 s-20 s, 5 s-10 s, 10 s-60 s, 10 s-40 s, or 10 s-20 s.

In some embodiments, a pressure for the hot-pressing may be 1 MPa-10 MPa, 2 MPa-8 MPa, 3 MPa-7 MPa, or 4 MPa-6 MPa.

By adjusting the preparation parameters of the separation film, such as drying parameters and hot-pressing parameters, the separation film obtained by compounding the first base film, the intermediate layer and the second base film has good mechanical strength, self-supporting properties and heat resistance. In addition, the depth of embedding of the filler particles into the base film can be adjusted by adjusting the hot-pressing parameters of the separation film within the range, so that the overall thickness of the separation film is reduced, and the energy density of the battery is further improved.

In some embodiments, the intermediate layer slurry may be applied by transfer coating, rotary spray coating, dip coating, and the like, which is not limited in the embodiments of the present application.

Each raw material (e.g., the first base film, the second base film, the filler particles, and the binder) used in the preparation method of the separation film may be commercially available, if not otherwise specified.

## Secondary battery

The embodiments of the present application further provide a secondary battery.

Secondary batteries, also known as rechargeable batteries or storage batteries, refer to batteries that can continue to be used by reactivating their active materials through charging after discharging. In general, a secondary battery includes an electrode assembly including a positive electrode plate, a negative electrode plate, and a separation film disposed between the positive electrode plate and the negative electrode plate, and an electrolytic solution, and the separation film mainly functions to prevent the positive electrode and the negative electrode from being short-circuited and allow active ions to pass through.

The present application is not particularly limited in kind of the secondary battery, and for example, the secondary battery may be a lithium-ion battery, a sodium-ion battery, a lithium-metal battery, a sodium-metal battery, or the like, and particularly, the secondary battery may be a lithium-ion battery.

The secondary battery according to the embodiments of the present application includes the separation film of the present application as described above or the separation film prepared by the method according to the present application as described above, and the separation film can improve the reliability of the secondary battery, and can further prolong the cycle life of the secondary battery.

[Positive Electrode Plate]

In some embodiments, the positive electrode plate includes a positive electrode current collector and a positive electrode film layer disposed on at least one surface of the positive electrode current collector and including a positive electrode active material. For example, the positive electrode current collector is provided with two surfaces opposite to each other in its own thickness direction, and the positive electrode film layer is disposed on any one or both of the two opposite surfaces of the positive electrode current collector.

When the secondary battery is a lithium-ion battery, the positive electrode active material may include, but is not limited to, at least one of a lithium transition metal oxide, a lithium-containing phosphate, and a respective modified compound thereof. Examples of the lithium transition metal oxide may include, but are not limited to, at least one of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and respective modified compounds thereof. Examples of the lithium-containing phosphate may include, but are not limited to, at least one of lithium iron phosphate, a composite material of lithium iron phosphate and carbon, lithium manganese phosphate, a composite material of lithium manganese phosphate and carbon, lithium iron manganese phosphate, a composite material of lithium iron manganese phosphate and carbon, and respective modified compounds thereof.

In some embodiments, in order to further improve the energy density of the secondary battery, the positive electrode active material of the lithium-ion battery may include at least one of a lithium transition metal oxide with a general formula $Li_aNi_bCo_cM_dO_eA_f$ and modified compounds thereof, where $0.8 \leq a \leq 1.2$, $0.5 \leq b < 1$, $0 < c < 1$, $0 < d < 1$, $1 \leq e \leq 2$, $0 \leq f \leq 1$, M is selected from at least one of Mn, Al, Zr, Zn, Cu, Cr, Mg, Fe, V, Ti, and B, and A is selected from at least one of N, F, S, and Cl.

As an example, the positive electrode active material of the lithium-ion battery may include at least one of $LiCoO_2$, $LiNiO_2$, $LiMnO_2$, $LiMn_2O_4$, $LiNi_{1/3}Co_{1/3}Mn_{1/3}O_2$ (NCM333), $LiNi_{0.5}Co_{0.2}Mn_{0.3}O_2$ (NCM523), $LiNi_{0.6}Co_{0.2}Mn_{0.2}O_2$ (NCM622), $LiNi_{0/8}Co_{0.1}Mn_{0.1}O_2$ (NCM811), $LiNi_{0.85}Co_{0.15}Al_{0.05}O_2$, $LiFePO_4$, and $LiMnPO_4$.

When the secondary battery is a sodium-ion battery, the positive electrode active material may include, but is not limited to, at least one of a sodium-containing transition metal oxide, a polyanionic material (such as phosphates, fluorophosphates, pyrophosphates, and sulfates), and a Prussian blue-type material.

As an example, the positive electrode active material of the sodium-ion battery may include at least one of $NaFeO_2$, $NaCoO_2$, $NaCrO_2$, $NaMnO_2$, $NaNiO_2$, $NaNi_{1/2}Ti_{1/2}O_2$, $NaNi_{1/2}Mn_{1/2}O_2$, $Na_{2/3}Fe_{1/3}Mn_{2/3}O_2$, $NaNi_{1/3}Co_{1/3}Mn_{1/3}O_2$, $NaFePO_4$, $NaMnPO_4$, $NaCoPO_4$, a Prussian blue-type material, a material with a general formula $X_pM'_q(PO_4)_rO_xY_{3-x}$. In the general formula $X_pM'_q(PO_4)_rO_xY_{3-x}$, $0 < p \leq 4$, $0 < q \leq 2$, $1 \leq r \leq 3$, $0 \leq x \leq 2$, X is selected from at least one of $H^+$, $Li^+$, $Na^+$, $K^+$, and $NH_4^+$, M' is a transition metal cation, optionally at least one of V, Ti, Mn, Fe, Co, Ni, Cu, and Zn, and Y is a halogen anion, optionally at least one of F, Cl and Br.

The modified compounds of the above positive electrode active materials may be obtained by doping modification and/or surface-coating modification of the positive electrode active materials.

In some embodiments, the positive electrode film layer further optionally includes a positive electrode conductive agent. The present application does not particularly limit the type of the positive electrode conductive agent. As an example, the positive electrode conductive agent includes at least one of superconducting carbon, conductive graphite, acetylene black, carbon black, Ketjen black, a carbon dot, a carbon nanotube, graphene, and a carbon nanofiber.

In some embodiments, the positive electrode film layer further optionally includes a positive electrode binder. The present application does not particularly limit the type of the positive electrode binder. As an example, the positive electrode binder may include at least one of polyvinylidene difluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate-based resin.

In some embodiments, a metal foil or a composite current collector may be used as the positive electrode current collector. As an example of the metal foil, an aluminum foil may be used. The composite current collector may include a polymer material substrate and a metal material layer formed on at least one surface of the polymer material substrate. As an example, the metal material may include at least one of aluminum, an aluminum alloy, nickel, a nickel alloy, titanium, a titanium alloy, silver, and a silver alloy. As an example, the polymer material substrate may include at least one of polypropylene (PP), polyethylene terephthalate (PET), polybutylene terephthalate (PBT), polystyrene (PS), and polyethylene (PE).

The positive electrode film layer is generally formed by coating a positive electrode current collector with a positive electrode slurry, drying, and cold pressing. The positive electrode slurry is generally formed by dispersing the positive electrode active material, an optional conductive agent, an optional binder, and any other components in a solvent and stirring them uniformly. The solvent may be N-methylpyrrolidone (NMP), but is not limited thereto.

[Negative Electrode Plate]

In some embodiments, the negative electrode plate includes a negative electrode current collector and a negative electrode film layer disposed on at least one surface of the negative electrode current collector and including a negative electrode active material. For example, the negative electrode current collector is provided with two surfaces opposite to each other in its own thickness direction, and the negative electrode film layer is disposed on any one or both of the two opposite surfaces of the negative electrode current collector.

The negative electrode active material may be any negative electrode active material known in the art for use in the secondary batteries. As an example, the negative electrode active material may include, but is not limited to, at least one of natural graphite, artificial graphite, soft carbon, hard carbon, a silicon-based material, a tin-based material, and lithium titanate. The silicon-based material may include at least one of elemental silicon, an oxide of silicon, a silicon-carbon composite, a silicon-nitrogen composite, and a silicon alloy material. The tin-based material may include at least one of elemental tin, an oxide of tin, and a tin alloy material.

In some embodiments, the negative electrode film layer further optionally includes a negative electrode conductive agent. The present application does not particularly limit the type of the negative electrode conductive agent. As an example, the negative electrode conductive agent may include at least one of superconducting carbon, conductive graphite, acetylene black, carbon black, Ketjen black, a carbon dot, a carbon nanotube, graphene, and a carbon nanofiber.

In some embodiments, the negative electrode film layer further optionally includes a negative electrode binder. The present application does not particularly limit the type of the negative electrode binder. As an example, the negative electrode binder may include at least one of styrene-butadiene rubber (SBR), water-soluble unsaturated resin SR-1B, aqueous acrylic resin (e.g., polyacrylic acid PAA, polymethacrylic acid PMAA, or sodium polyacrylate PAAS), polyacrylamide (PAM), polyvinyl alcohol (PVA), sodium alginate (SA), and carboxymethyl chitosan (CMCS).

In some embodiments, the negative electrode film layer further optionally includes other auxiliary agents. As an example, other auxiliary agents may include thickeners, such as sodium carboxymethylcellulose (CMC) or PTC thermistor materials.

In some embodiments, a metal foil or a composite current collector may be used as the negative electrode current collector. As an example of the metal foil, a copper foil may be used. The composite current collector may include a polymer material substrate and a metal material layer formed on at least one surface of the polymer material substrate. As an example, the metal material may include at least one of copper, a copper alloy, nickel, a nickel alloy, titanium, a titanium alloy, silver, and a silver alloy. As an example, the polymer material substrate may include at least one of polypropylene (PP), polyethylene terephthalate (PET), polybutylene terephthalate (PBT), polystyrene (PS), and polyethylene (PE).

The negative electrode film layer is generally formed by coating a negative electrode current collector with a negative electrode slurry, drying, and cold pressing. The negative electrode slurry is generally formed by dispersing a negative electrode active material, an optional conductive agent, an optional binder, and other optional auxiliary agents in a solvent and uniformly stirring. The solvent may be N-methylpyrrolidone (NMP) or deionized water, but is not limited thereto.

The negative electrode plate does not exclude additional functional layers other than the negative electrode film layer. For example, in some embodiments, the negative electrode plate further includes a conductive bottom coating (e.g., composed of a conductive agent and a binder) interposed between the negative electrode current collector and the negative electrode film layer and disposed on the surface of the negative electrode current collector. In some embodiments, the negative electrode plate according to the present application further includes a protective layer covering the surface of the negative electrode film layer.

[Electrolytic Solution]

In the process of charging and discharging the secondary battery, active ions are embedded and separated back and forth between the positive electrode plate and the negative electrode plate, and the electrolytic solution plays a role of conducting the active ions between the positive electrode plate and the negative electrode plate. The present application does not particularly limit the type of the electrolytic solution, and a choice can be made as needed in practice.

The electrolytic solution includes an electrolyte salt and a solvent. The types of the electrolyte salt and the solvent are not particularly limited, and a choice can be made as needed in practice.

When the secondary battery is a lithium-ion battery, as an example, the electrolyte salt may include, but is not limited to, at least one of lithium hexafluorophosphate (LiPF$_6$), lithium tetrafluoroborate (LiBF$_4$), lithium perchlorate (LiClO$_4$), lithium hexafluoroarsenate (LiAsF$_6$), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalate)borate (LiBOB), lithium difluorophosphate (LiPO$_2$F$_2$), lithium difluorobis(oxalato)phosphate (LiDFOP), and lithium tetrafluoro(oxalato)phosphate (LiTFOP).

When the secondary battery is a sodium-ion battery, as an example, the electrolyte salt may include, but is not limited to, at least one of sodium hexafluorophosphate (NaPF$_6$), sodium tetrafluoroborate (NaBF$_4$), sodium perchlorate (NaClO$_4$), sodium hexafluoroarsenate (NaAsF$_6$), sodium bis(fluorosulfonyl)imide (NaFSI), sodium bis(trifluoromethanesulfonyl)imide (NaTFSI), sodium trifluoromethanesulfonate (NaTFS), sodium difluoro(oxalato)borate (NaDFOB), sodium bis(oxalate)borate (NaBOB), sodium difluorophosphate (NaPO$_2$F$_2$), sodium difluorobis(oxalato)phosphate (NaDFOP), and sodium tetrafluoro(oxalato)phosphate (NaTFOP).

As an example, the solvent may include, but is not limited to, at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS), and diethyl sulfone (ESE).

In some embodiments, the electrolytic solution further optionally includes an additive. For example, the additive may include a negative electrode film-forming additive, or may include a positive electrode film-forming additive, or may include an additive capable of improving certain properties of the battery, such as an additive for improving the overcharge performance of the battery, an additive for improving the high-temperature performance of the battery, or an additive for improving the low-temperature power performance of the battery.

In some embodiments, the positive electrode plate, the separation film, and the negative electrode plate may be manufactured into an electrode assembly through a winding process and/or a stacking process. It can be understood that the separation film of the present application includes both a first base film and a second base film, which may be optionally oriented towards the positive or negative electrode plates. For example, the first base film is oriented towards the positive electrode plate, and the second base film is oriented towards the negative electrode plate; or the first base film is oriented towards the negative electrode plate, and the second base film is oriented towards the positive electrode plate. In order to further improve the safety performance of the battery, in the secondary battery of the present application, the first base film of the separation film may be oriented towards the negative electrode plate, and the second base film is oriented towards the positive electrode plate. The inventors have found through research that when the pore size of the first base film in the separation film according to the present application is within a specific range, and the first base film is oriented towards the negative electrode, it is more favorable for the rapid passing of active ions (such as lithium ions), so that the lithium intercalation speed is ensured, and the uniformity of lithium intercalation is facilitated, which is beneficial to reducing the generation and growth of lithium dendrites, thereby further improving the safety performance of the battery.

In some embodiments, the secondary battery may include an outer packaging. The outer packaging can be used for packaging the electrode assembly and the electrolytic solution described above.

In some embodiments, the outer packaging of the secondary battery may be a hard shell, such as a hard plastic shell, an aluminum shell, or a steel shell. The outer packaging of the secondary battery may also be a soft pack, such as a pouch-type soft pack. The soft pack may be made of plastic, such as at least one of polypropylene (PP), polybutylene terephthalate (PBT), and polybutylene succinate (PBS).

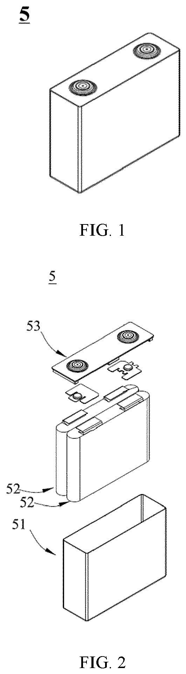

The present application does not particularly limit the shape of the secondary battery, and it may have a cylindrical shape, a prismatic shape, or any other shape. FIG. 1 shows a secondary battery 5 having a square structure as one example.

In some embodiments, as shown in FIG. 2, the outer packaging may include a housing 51 and a cover plate 53. The housing 51 may include a bottom plate and side plates connected to the bottom plate, and the bottom plate and the side plates define, in an enclosing manner, an accommodating cavity. The housing 51 is provided with an opening communicating with the accommodating cavity, and the cover plate 53 is configured for lidding the opening to close the accommodating cavity. The positive electrode plate, the negative electrode plate, and the separation film may be subjected to a winding process or a stacking process to form an electrode assembly 52. The electrode assembly 52 is packaged in the accommodating cavity. The electrolytic solution is infiltrated into the electrode assembly 52. The number of electrode assemblies 52 included in the secondary battery 5 may be one or more and may be adjusted as needed.

Methods for preparing a secondary battery are well known. In some embodiments, a positive electrode plate, a separation film, a negative electrode plate, and an electrolytic solution may be assembled to form a secondary battery. As an example, the secondary battery is obtained by subjecting the positive electrode plate, the separation film, and the negative electrode plate to a winding process and/or a stacking process to form an electrode assembly, placing the electrode assembly in an outer packaging, injecting an electrolytic solution into the outer packaging after drying, and subjecting the outer packaging to vacuum packaging, standing, formation, shaping, and other procedures.

In some embodiments, the secondary battery according to the present application may be assembled into a battery module. The number of secondary batteries included in the battery module may be a plurality, and the specific number may be adjusted according to the application and capacity of the battery module.

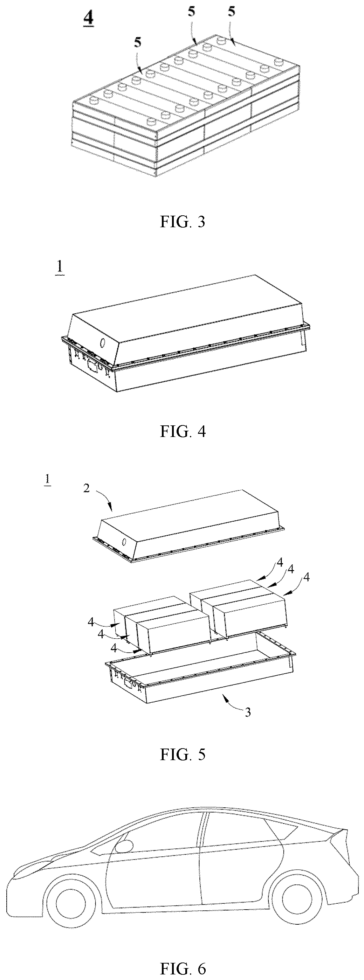

FIG. 3 is a schematic diagram of a battery module 4 as one example. As shown in FIG. 3, in the battery module 4, a plurality of secondary batteries 5 may be disposed in sequence along a lengthwise direction of the battery module 4. Certainly, the arrangement may also be in any other manner. Further, the plurality of secondary batteries 5 may be fixed by a fastener.

Optionally, the battery module 4 may further include a shell providing with an accommodating space in which the plurality of secondary batteries 5 are accommodated.

In some embodiments, the above battery module may further be assembled into a battery pack; the number of the battery modules included in the battery pack may be adjusted based on the application and capacity of the battery pack.

FIG. 4 and FIG. 5 are schematic diagrams of a battery pack 1 as one example. As shown in FIG. 4 and FIG. 5, the battery pack 1 may include a battery case and a plurality of battery modules 4 disposed in the battery case. The battery case includes an upper case body 2 and a lower case body 3. The upper case body 2 is configured for lidding the lower case body 3 and forming a closed space for accommodating the battery modules 4. The plurality of battery modules 4 may be disposed in any manner in the battery case.

## Electric Device

The embodiments of the present application further provide an electric device. The electric device includes at least one of the secondary battery, the battery module, or the battery pack according to the embodiments of the present application. The secondary battery, the battery module, or the battery pack can be used as a power source for the electric device, and they can also be used as an energy storage unit for the electric device. The electric device may be, but is not limited to, a mobile device (e.g., a mobile phone or a notebook computer), an electric vehicle (e.g., a pure electric vehicle, a hybrid electric vehicle, a plug-in hybrid electric vehicle, an electric bicycle, an electric scooter, an electric golf cart, or an electric truck), an electric train, ship, or satellite, an energy storage system, or the like.

A secondary battery, a battery module, or a battery pack may be selected based on the use requirements of the electric device.

FIG. 6 is a schematic diagram of an electric device as one example. The electric device is a pure electric vehicle, a hybrid electric vehicle, a plug-in hybrid electric vehicle, or the like. To meet the requirements of the electric device for high power and high energy density of the battery, the battery pack or the battery module may be used.

As another example, the electric device may be a mobile phone, a tablet computer, a notebook computer, or the like. The electric device is generally required to be light and thin, and a secondary battery can thus be used as a power source.

## Examples

The following examples more specifically describe the content disclosed in the present application. These examples are intended for illustrative purposes only, since various modifications and changes within the scope of the content disclosed in the present application will be apparent to those skilled in the art. Unless otherwise stated, all parts, percentages, and ratios reported in the following examples are based on mass, and all reagents used in the examples are commercially available or synthesized according to conventional methods and can be used directly without further treatment, and the instruments used in the examples are commercially available.

## Example 1

Preparation of separation film

A first base film and a second base film were provided. The first base film is made of PTFE, with a melting point of 327 °C, an average pore size of 0.22 $\mu$m, a porosity of 87%, and a thickness of 2.8 $\mu$m. The second base film is made of PE, with a melting point of 142 °C, an average pore size of 0.03 $\mu$m, a porosity of 33%, and a thickness of 5 $\mu$m.

An intermediate layer slurry was provided: the intermediate layer slurry was prepared by uniformly mixing boehmite serving as the filler particles, polyacrylate serving as a binder and carboxymethyl cellulose in an appropriate amount of deionized water serving as a solvent at a mass ratio of 4:1:1. The filler particles boehmite have a volume distribution particle size Dv50 of 0.2 $\mu$m.

The separation film was prepared by coating the PTFE base film with the intermediate layer slurry and drying, and performing hot-pressing compounding of the PE base film and the PTFE base film to enable the intermediate layer to be disposed between the PTFE base film and the PE base film, where the drying temperature was 37 °C, the drying time was 5 s, the hot-pressing temperature was 40 °C, the hot-pressing time was 5 s, and the hot-pressing pressure was 5 MPa.

Preparation of positive electrode plate

The positive electrode plate was obtained by uniformly mixing $LiNi_{0.8}Co_{0.1}Mn_{0.1}O_2$ (NCM811) serving as a positive electrode active material, carbon black (Super P) serving as a conductive agent and polyvinylidene difluoride (PVDF) serving as a binder in an appropriate amount of N-methylpyrrolidone (NMP) serving as a solvent at a mass ratio of 96.2:2.7:1.1 to obtain a positive electrode slurry; and coating an aluminum foil serving as a positive electrode current collector with the positive electrode slurry, and performing the procedures such as drying, cold pressing, slitting and cutting.

Preparation of negative electrode plate

The negative electrode plate was obtained by uniformly mixing artificial graphite serving as a negative electrode active material, carbon black (Super P) serving as a conductive agent, styrene-butadiene rubber (SBR) serving as a binder and sodium carboxymethylcellulose (CMC) in an appropriate amount of deionized water serving as a solvent at a mass ratio of 96.4:0.7:1.8:1.1 to obtain a negative electrode slurry; and coating a copper foil serving as a negative electrode current collector with the negative electrode slurry, and performing the procedures such as drying, cold pressing, slitting and cutting.

Preparation of electrolytic solution

Ethylene carbonate (EC), dimethyl carbonate (DMC) and ethyl methyl carbonate (EMC) were mixed in a mass ratio of 30:30:40 to obtain an organic solvent, and $LiPF_6$, which was sufficiently dried, was dissolved in the above organic solvent to prepare an electrolytic solution having a concentration of 1 mol/L.

Preparation of secondary battery

The secondary battery was obtained by the steps of: stacking and winding the positive electrode plate, the separation film prepared as described above and the negative electrode plate in sequence to obtain an electrode assembly, where the first base film in the separation film was oriented towards the negative electrode; and placing the electrode assembly in an outer packaging, drying, injecting an electrolytic solution, and performing vacuum packaging, standing, forming, shaping and other procedures.

The secondary batteries of Examples 2 to 18 and Comparative Example 1 were similar to those of Example 1 except that: different base films were adopted or parameters of the intermediate layer were adjusted, as shown in Table 1 for details.

In the above examples and comparative examples, the respective melting points of the first base film and the second base film may be determined as follows: taking 4 mg-6 mg of a sample to be tested, placing the sample in a sample chamber of a differential scanning calorimeter, and heating the sample from 25 °C to 400 °C at a heating rate of 10 °C/min to obtain a melting endothermic curve of the sample, where the temperature corresponding to the peak value of the curve was the melting point of the sample.

In the above examples and comparative examples, the respective average pore sizes of the first base film and the second base film were measured by a mercury intrusion instrument with reference to GB/T 21650-2008.

The volume distribution particle size Dv50 of the filler particles can be determined by a laser particle size analyzer (Mastersizer 2000E, Malvern, UK) with reference to the GB/T 19077-2016 particle size distribution laser diffraction method.

**Test section**

The separation films and the secondary batteries of Examples 1 to 18 and Comparative Example 1 were subjected to the following tests, and the test results are shown in Table 2, respectively.

(1) Thermal shrinkage test of separation films

Sample preparation: the separation film prepared above was punched out into a sample having a width of 50 mm and a length of 100 mm by a punch, and 5 parallel samples were taken and placed on a glass plate and fixed.

Sample testing: the temperature of a blast type oven was set to be 250 °C; after the temperature reached the set temperature and was stabilized for 30 minutes, the glass plate was put into the blast type oven and timed for 1 hour, at the end of which, the length of the separation film was measured, where the numerical value of the length was marked as a in mm.

Calculation of thermal shrinkage: the machine direction (MD) thermal shrinkage = $[(100-a)/100] \times 100\%$, and the average of the 5 parallel samples was taken as the test result.

(2) Puncture strength test of separation film

The test was carried out with reference to GB/T 10004-2008. Specifically, the separation film was cut into strips to obtain test pieces having a width of 100 mm. The test pieces was mounted on the sample film fixing clamp ring, then a steel needle with the diameter of 1.0 mm and a radius of the tip of the diameter of 0.5 mm was used for thrusting the test pieces at the speed of $(50\pm5)$ mm/min, and the maximum load of the steel needle penetrating the test pieces was read. 5 sets of parallel samples were taken, each set of samples was randomly tested for 3 points, and the arithmetic mean value of the puncture strength of all the parallel samples was taken as the puncture strength of the separation film.

(3) Air permeability test of separation film

The air permeability of the separation film was tested with reference to GB/T 36363-2018.

(4) Cycle performance test of secondary battery at room temperature

The secondary batteries prepared in the examples and the comparative examples were subjected to the first charge and discharge at 25 °C as follows: after standing for 30 min at 25 °C, the secondary batteries were charged to 4.35 V at a constant current of 1 C, and then charged with constant voltage charging until the current was less than or equal to 0.05 C; and then discharged to 2.8 V at a constant current of 1 C, which was a charging and discharging process, at which the discharge capacity was recorded as the discharge capacity of the battery in the first cycle. The charge and discharge cycles were repeated in this manner, and the number of cycles when the capacity decreased to 80% was recorded.

(5) Energy density test of secondary battery

At room temperature, the secondary batteries was charged for the first time at a current rate of 1 C, where the charging was constant-current constant-voltage charging, with the final voltage of 4.2 V, and the cutoff current of 0.05 C; the secondary batteries were discharged at a current rate of 1 C, with the discharge final voltage of 2.8 V, and the discharge capacity $C_b$ and the discharge plateau voltage U of the secondary batteries at the first cycle were recorded.

The mass m of the battery was weighed by using an electronic balance, and the energy density of the secondary battery was calculated by the following equation:

$$\text{the energy density} = C_b \ast U/m.$$

Table 1

| No. | First base film | | | | Second base film | | | |
|---|---|---|---|---|---|---|---|---|
| | Substance | Melting point/°C | Average pore size/μm | Porosity | Substance | Melting point/°C | Average pore size/μm | Porosity |
| Example 1 | PTFE | 327 | 0.22 | 87% | PE | 142 | 0.03 | 33% |
| Example 2 | PTFE | 327 | 1.0 | 87% | PE | 142 | 0.03 | 33% |
| Example 3 | PTFE | 327 | 1.2 | 87% | PE | 142 | 0.03 | 33% |
| Example 4 | PTFE | 327 | 2.7 | 87% | PE | 142 | 0.03 | 33% |

(continued)

| No. | First base film | | | | Second base film | | | |
|---|---|---|---|---|---|---|---|---|
| | Substance | Melting point/°C | Average pore size/μm | Porosity | Substance | Melting point/°C | Average pore size/μm | Porosity |
| Example 5 | PTFE | 327 | 3.6 | 87% | PE | 142 | 0.03 | 33% |
| Example 6 | PTFE | 327 | 4.0 | 87% | PE | 142 | 0.03 | 33% |
| Example 7 | PTFE | 327 | 1.2 | 87% | PE | 142 | 0.06 | 33% |
| Example 8 | PTFE | 327 | 1.2 | 87% | PE | 142 | 0.1 | 33% |
| Example 9 | PTFE | 327 | 1.2 | 87% | PE | 142 | 0.3 | 33% |
| Example 10 | PTFE | 327 | 1.2 | 87% | PE | 142 | 0.5 | 33% |
| Example 11 | PLA | 175 | 1.2 | 87% | PE | 142 | 0.03 | 33% |
| Example 12 | PI | 220 | 1.2 | 87% | PE | 142 | 0.03 | 33% |
| Example 13 | PET | 260 | 1.2 | 87% | PE | 142 | 0.03 | 33% |
| Example 14 | PEEK | 350 | 1.2 | 87% | PE | 142 | 0.03 | 33% |
| Example 15 | PTFE | 327 | 1.2 | 40% | PE | 142 | 0.03 | 33% |
| Example 16 | PTFE | 327 | 1.2 | 60% | PE | 142 | 0.03 | 33% |
| Example 17 | PTFE | 327 | 1.2 | 70% | PE | 142 | 0.03 | 33% |
| Example 18 | PTFE | 327 | 1.2 | 80% | PE | 142 | 0.03 | 33% |
| Comparative Example 1 | PTFE | 327 | 0.1 | 87% | PE | 142 | 0.01 | 33% |

Table 2

| No. | Thermal shrinkage (MD) | Puncture strength/gf | Air permeability/ (sec/100 cc) | Cycle performance/ cycles | Energy density (Wh/kg) |
|---|---|---|---|---|---|
| Example 1 | 0.20% | 495 | 140 | 2319 | 220 |
| Example 2 | 0.17% | 469 | 135 | 2380 | 225 |
| Example 3 | 0.16% | 452 | 130 | 2450 | 239 |
| Example 4 | 0.15% | 445 | 120 | 2312 | 240 |
| Example 5 | 0.13% | 432 | 115 | 2302 | 247 |
| Example 6 | 0.10% | 422 | 112 | 2300 | 252 |
| Example 7 | 0.23% | 420 | 123 | 2312 | 239 |
| Example 8 | 0.25% | 412 | 119 | 2310 | 242 |
| Example 9 | 0.27% | 390 | 110 | 2307 | 246 |
| Example 10 | 0.30% | 380 | 105 | 2301 | 253 |
| Example 11 | 0.20% | 476 | 134 | 2322 | 235 |
| Example 12 | 0.35% | 482 | 142 | 2341 | 236 |
| Example 13 | 0.30% | 480 | 151 | 2357 | 237 |
| Example 14 | 0.25% | 485 | 131 | 2312 | 233 |
| Example 15 | 0.26% | 472 | 171 | 2325 | 215 |
| Example 16 | 0.24% | 465 | 162 | 2341 | 227 |
| Example 17 | 0.21% | 461 | 150 | 2357 | 230 |

(continued)

| No. | Thermal shrinkage (MD) | Puncture strength/gf | Air permeability/ (sec/100 cc) | Cycle performance/ cycles | Energy density (Wh/kg) |
|---|---|---|---|---|---|
| Example 18 | 0.18% | 453 | 141 | 2412 | 232 |
| Comparative Example 1 | 0.60% | 350 | 210 | 1900 | 200 |

As can be seen from the test results of Table 2, when the separation film includes a first base film having a high melting point, a second base film, and an intermediate layer located between the first base film and the second base film, and the average pore size of the first base film falls within the range according to the embodiments of the present application, the energy density and the cycle performance of the battery can be significantly improved.

Based on the test results of Examples 1 to 6, it can be seen that as the average pore size of the first base film increases, the heat resistance and the air permeability of the separation film are gradually improved when other conditions remain unchanged. In addition, as the average pore size of the first base film increases, the energy density of the secondary battery also gradually increases. This is probably due to the fact that the larger average pore size of the first base film is advantageous to increasing the depth of embedding of the filler particles and the number of filler particles embedded into the first base film, so that the supporting capacity can be provided by means of the composite structure of the first base film and the filler particles, and the overall thickness of the separation film is reduced, thereby improving the cycle performance and energy density of the secondary battery. Based on the test results of Examples 3 and 7 to 10, it can be seen that, while the heat resistance and strength of the separation film are reduced as the average pore size of the second base film increases with the other conditions remain unchanged, the air permeability of the separation film and the energy density of the secondary battery are improved. Therefore, the average pore size of the second base film can be adjusted according to actual needs, such that the secondary battery has both good cycle performance and high energy density. It can be seen from the test results of Examples 3 and 15 to 18 that, when the other conditions remain unchanged, the heat resistance, puncture strength and air permeability of the separation film are all improved as the porosity of the first base film is increased, so that the cycle performance of the secondary battery can be improved and the cycle life of the secondary battery can be prolonged. In addition, with the increase of the porosity of the first base film, the number of filler particles embedded into the first base film increases, so that the overall thickness of the separation film is favorably reduced, and the energy density of the secondary battery is further improved.

In contrast, in the separation film of Comparative Example 1, the average pore size of the first base film was smaller than the range of the embodiments of the present application, and the filler particles were difficult to embed into the first base film, and thus, it was not only difficult to form a composite structure having high mechanical strength, and it was also difficult to reduce the overall thickness of the separation film. Therefore, the heat resistance and the puncture strength of the separation film of Comparative Example 1 were much lower than those of Examples 1 to 18, and the energy density and the cycle performance of the secondary battery of Comparative Example 1 were also undesirable.

It should be noted that the present application is not limited to the embodiments described above. The embodiments described above are merely examples, and any embodiments having a structure substantially identical to the technical concept and exerting the same functional effects within the scope of the technical solutions of the present application are all included within the technical scope of the present application. Furthermore, without departing from the spirit of the present application, other embodiments formed by applying various variations that can be conceived by those skilled in the art to the embodiments and by combining some of the constituent elements of the embodiments are also included within the scope of the present application.

**Claims**

1. A separation film, comprising:

   a first base film, the first base film having a melting point of 175 °C or above and an average pore size of greater than or equal to 0.22 $\mu$m;
   a second base film; and
   an intermediate layer, the intermediate layer being located between the first base film and the second base film, the intermediate layer comprising filler particles, and at least some of the filler particles being embedded into the first base film.

2. The separation film according to claim 1, wherein the average pore size of the first base film is 0.22 $\mu$m-4.0 $\mu$m, and

optionally 1.0 μm-2.7 μm.

3. The separation film according to claim 1 or 2, wherein

an average pore size of the second base film is smaller than the average pore size of the first base film; optionally, the average pore size of the second base film is 0.01 μm-0.5 μm, and more optionally 0.02 μm-0.1 μm.

4. The separation film according to any one of claims 1-3, wherein the filler particles are embedded into the first base film to a depth of greater than or equal to 0.2 μm, and optionally 0.5 μm-1.0 μm.

5. The separation film according to any one of claims 1-4, wherein the filler particles are embedded into the second base film to a depth of greater than or equal to 0.1 μm, and optionally 0.1 μm-0.5 μm.

6. The separation film according to any one of claims 1-5, wherein the filler particles are embedded into a greater depth in the first base film than in the second base film.

7. The separation film according to any one of claims 1-6, wherein

the melting point of the first base film is greater than or equal to a melting point of the second base film; optionally, the melting point of the first base film is 175 °C to 350 °C, and more optionally 220 °C to 350 °C; optionally, the melting point of the second base film is 130 °C to 200 °C, and more optionally 135 °C to 180 °C.

8. The separation film according to any one of claims 1-7, wherein

a machine direction elongation at break of the first base film is 20%-105%, and optionally 40%-90%; and/or a cross direction elongation at break of the first base film is 20%-105%, and optionally 40%-90%.

9. The separation film according to any one of claims 1-8, wherein

a machine direction elongation at break of the second base film is less than a cross direction elongation at break of the second base film; the machine direction elongation at break of the second base film is greater than or equal to 40%, and optionally 60%-150%; and/or the cross direction elongation at break of the second base film is greater than or equal to 60%, and optionally 80%-160%.

10. The separation film according to any one of claims 1-9, wherein

a porosity of the first base film is greater than a porosity of the second base film; optionally, the porosity of the first base film is 50%-98%; optionally, the porosity of the second base film is 20%-60%.

11. The separation film according to any one of claims 1-10, wherein

a relative molecular mass of the first base film is greater than a relative molecular mass of the second base film; optionally, the relative molecular mass of the first base film is 300,000 to 6,000,000, and more optionally 1,000,000 to 3,000,000; optionally, the relative molecular mass of the second base film is 100,000 to 3,000,000, and more optionally 400,000 to 1,500,000.

12. The separation film according to any one of claims 1-11, wherein

a ratio of a thickness of the first base film to a thickness of the second base film is 0.15-2.0, and optionally 0.3-0.6; optionally, the thickness of the first base film is 1 μm-10 μm, and more optionally 1 μm-3 μm; optionally, the thickness of the second base film is 2 μm-10 μm, and more optionally 3 μm-6 μm.

13. The separation film according to any one of claims 1-12, wherein

an air permeability of the first base film is less than an air permeability of the second base film;
optionally, a ratio of the air permeability of the first base film to the air permeability of the second base film is 0.1-0.5, and more optionally 0.2-0.4;
optionally, the air permeability of the first base film is 20 sec/100 cc-100 sec/100 cc, and more optionally 30 sec/100 cc-40 sec/100 cc;
optionally, the air permeability of the second base film is 100 sec/100 cc-300 sec/100 cc, and more optionally 100 sec/100 cc-150 sec/100 cc.

14. The separation film according to any one of claims 1-13, wherein

a puncture strength of the first base film is less than a puncture strength of the second base film;
optionally, the puncture strength of the first base film is 20 gf-150 gf, and more optionally 20 gf-80 gf;
optionally, the puncture strength of the second base film is 60 gf-400 gf, and more optionally 80 gf-270 gf.

15. The separation film according to any one of claims 1-14, wherein
a material of the first base film comprises at least one of polytetrafluoroethylene and derivatives thereof, polyethylene terephthalate and derivatives thereof, polyimide and derivatives thereof, polyetheretherketone and derivatives thereof, polyphenylene sulfide and derivatives thereof, polybenzimidazole and derivatives thereof, polysulfone and derivatives thereof, and polylactic acid and derivatives thereof.

16. The separation film according to any one of claims 1-15, wherein
a material of the second base film comprises at least one of polyolefin, halogenated polyolefin, polyether, polyester, polyvinyl alcohol, polytetrafluoroethylene and derivatives thereof, polyethylene terephthalate and derivatives thereof, polyimide and derivatives thereof, polyetheretherketone and derivatives thereof, polyphenylene sulfide and derivatives thereof, polybenzimidazole and derivatives thereof, and polysulfone and derivatives thereof.

17. The separation film according to any one of claims 1-16, wherein

a volume distribution particle size Dv50 of the filler particles is 0.01 $\mu$m-0.8 $\mu$m, and optionally 0.2 $\mu$m-0.8 $\mu$m; and/or
the filler particles are present in an amount of less than or equal to 90%, and optionally 20%-80%, based on the total mass of the intermediate layer; and/or
a specific surface area of the filler particles is 2 g/m$^2$-20 g/m$^2$, and optionally 6 g/m$^2$-9 g/m$^2$.

18. The separation film according to any one of claims 1-17, wherein

the filler particles comprise at least one of inorganic particles, organic particles, and organo-metallic framework materials;
optionally, the inorganic particles comprise one or more of inorganic particles having a dielectric constant of 5 or more, inorganic particles having ion conductivity but not storing ions, and inorganic particles capable of undergoing electrochemical reactions;
optionally, the organic particles comprise one or more of polycarbonate, polythiophene, polypyridine, polystyrene, polyacrylic wax, polyethylene, polypropylene, cellulose, cellulose modifiers, melamine resins, phenolic resins, polyesters, silicone resins, polyimides, polyamideimides, polyaramids, polyphenylene sulfides, polysulfones, polyether sulfones, polyether etherketones, polyaryletherketones, and copolymers of butyl acrylate and ethyl methacrylate;
optionally, the organo-metallic framework materials comprise one or more of a nitrogen-containing heterocyclic ligand building structure, an organic carboxylic ligand building structure, and a nitrogen-oxygen-containing mixed ligand building structure.

19. The separation film according to any one of claims 1-18, wherein

the intermediate layer further comprises a binder, the binder comprising one or more of polyacrylate, polyacrylic acid, polyimide, polytetrafluoroethylene, polyvinylidene fluoride, vinylidene fluoride-trichloroethylene copolymer, polyvinylpyrrolidone, polyvinyl acetate, ethylene-vinyl acetate copolymer, polyethylene oxide, polyarylate, carboxymethyl cellulose, hydroxypropyl cellulose, regenerated cellulose, cellulose acetate, cellulose acetate propionate, cellulose acetate butyrate, polyacrylonitrile, polyvinyl alcohol, polyethylene, polypropylene, starch, cyanoethyl amylopectin, thermoplastic polyurethane, maleic anhydride, and ethylene-acrylic acid copolymer; optionally, the binder is present in an amount of less than or equal to 35%, and more optionally 10%-30%, based on the total mass of the intermediate layer.

20. The separation film according to any one of claims 1-19, wherein the separation film satisfies at least one of the following (1) to (6):

(1) a thickness of the separation film is less than or equal to 7 $\mu$m, and optionally 3 $\mu$m-6 $\mu$m;
(2) an air permeability of the separation film is 100 sec/100 cc-300 sec/100 cc, and optionally 120 sec/100 cc-200 sec/100 cc;
(3) a cross direction thermal shrinkage of the separation film at 250 °C for 1 h is less than or equal to 1.0%, and optionally less than or equal to 0.4%;
(4) a machine direction thermal shrinkage of the separation film at 250 °C for 1 h is less than or equal to 1.0%, and optionally less than or equal to 0.3%;
(5) a cross direction tensile strength of the separation film is greater than or equal to 0.5 N, and optionally 1.2 N-3.5 N;
(6) a machine direction tensile strength of the separation film is greater than or equal to 0.5 N, and optionally 1.2 N to 3.5 N.

21. A method for preparing the separation film according to any one of claims 1-20, comprising the following steps:

providing a first base film, a second base film and an intermediate layer slurry comprising filler particles, wherein the melting point of the first base film is 175 °C or above, and the average pore size of the first base film is greater than or equal to 0.22 $\mu$m;
coating one of the first base film and the second base film with the intermediate layer slurry and drying, followed by laminating the intermediate layer slurry to the other of the first base film and the second base film, and hot-pressing to embed at least some of the filler particles into the first base film, thereby obtaining the separation film; optionally, the slurry further comprises a binder.

22. The method according to claim 21, wherein the method satisfies at least one of the following (1)-(5):

(1) a temperature for the drying is 35 °C to 80 °C, and optionally 40 °C to 60 °C;
(2) a time for the drying is 5 s to 60 s, and optionally 5 s to 15 s;
(3) a temperature for the hot-pressing is 40 °C to 100 °C, and optionally 40 °C to 70 °C;
(4) a time for the hot-pressing is 5 s to 60 s, and optionally 5 s to 10 s;
(5) a pressure for the hot-pressing is 1 MPa to 10 MPa, and optionally 3 MPa to 7 MPa.

23. A secondary battery, comprising a positive electrode plate, a negative electrode plate, and the separation film according to any one of claims 1-20, the separation film being disposed between the positive electrode plate and the negative electrode plate; wherein
optionally, the first base film of the separation film is oriented towards the negative electrode plate.

24. An electric device, comprising the secondary battery according to claim 23.

**5**

FIG. 1

_5_

FIG. 2

FIG. 3

FIG. 4

FIG. 5

FIG. 6

## INTERNATIONAL SEARCH REPORT

| International application No. |
| --- |
| **PCT/CN2023/087926** |

### A.    CLASSIFICATION OF SUBJECT MATTER

H01M50/449(2021.01)i

According to International Patent Classification (IPC) or to both national classification and IPC

### B.    FIELDS SEARCHED

Minimum documentation searched (classification system followed by classification symbols)

IPC： H01M

Documentation searched other than minimum documentation to the extent that such documents are included in the fields searched

Electronic data base consulted during the international search (name of data base and, where practicable, search terms used)

CNABS, VEN, CNTXT, EPTXT, USTXT, WOTXT, CNKI, IEEE: 电池, 隔膜, 隔板, 隔件, 隔离膜, 第一, 第二, 两个, 两层, 两片, 多孔膜, 微孔膜, 基板, 基材, 基底, 基膜, 基体, 颗粒, 粒子, 填料, 孔径, 孔隙, 嵌, 填充, 填入, 插入, 熔点, 聚四氟乙烯, PTFE, 聚酰亚胺, battery, separator, membrane, first, second, two, layer?, sheet?, porous, microporous, substrate, base, particles, fillers, pore 2d size, embedd+, fill+, melting w point, polytetrafluoroethylene, polyimide

### C.    DOCUMENTS CONSIDERED TO BE RELEVANT

| Category* | Citation of document, with indication, where appropriate, of the relevant passages | Relevant to claim No. |
| --- | --- | --- |
| Y | CN 113410580 A (HENAN YITENG NEW ENERGY TECHNOLOGY CO., LTD.) 17 September 2021 (2021-09-17)<br>description, paragraphs 5-77 | 1-24 |
| Y | CN 105304846 A (TIANNENG BATTERY GROUP CO., LTD.) 03 February 2016 (2016-02-03)<br>description, paragraphs 6-31, and figure 1 | 1-24 |
| Y | CN 111063849 A (YANGZHOU POLYTECHNIC INSTITUTE) 24 April 2020 (2020-04-24)<br>description, paragraphs 4-34 | 1-24 |
| Y | WO 2021204735 A1 (CARL FREUDENBERG KG) 14 October 2021 (2021-10-14)<br>description, page 3, line 19 to page 28, line 2 | 1-24 |
| A | CN 102751462 A (CHINA HAISUM ENGINEERING CO., LTD.) 24 October 2012 (2012-10-24)<br>entire document | 1-24 |

☑ Further documents are listed in the continuation of Box C.       ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **17 August 2023** | **25 December 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/087926** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 104157812 A (SOUTH CHINA UNIVERSITY OF TECHNOLOGY) 19 November 2014 (2014-11-19)<br>       entire document | 1-24 |
| A | CN 109980164 A (NINGDE AMPEREX TECHNOLOGY LIMITED) 05 July 2019 (2019-07-05)<br>       entire document | 1-24 |
| A | US 2011143181 A1 (SAMSUNG SDI CO., LTD.) 16 June 2011 (2011-06-16)<br>       entire document | 1-24 |

# EP 4 641 806 A1

## INTERNATIONAL SEARCH REPORT
### Information on patent family members

International application No.

**PCT/CN2023/087926**

| Patent document cited in search report | | | Publication date (day/month/year) | Patent family member(s) | | | Publication date (day/month/year) |
|---|---|---|---|---|---|---|---|
| CN | 113410580 | A | 17 September 2021 | None | | | |
| CN | 105304846 | A | 03 February 2016 | CN | 105304846 | B | 06 July 2018 |
| CN | 111063849 | A | 24 April 2020 | None | | | |
| WO | 2021204735 | A1 | 14 October 2021 | DE | 102020109571 | A1 | 07 October 2021 |
| CN | 102751462 | A | 24 October 2012 | CN | 102751462 | B | 17 June 2015 |
| CN | 104157812 | A | 19 November 2014 | CN | 104157812 | B | 25 August 2017 |
| CN | 109980164 | A | 05 July 2019 | EP | 3712983 | A1 | 23 September 2020 |
| | | | | US | 2020303707 | A1 | 24 September 2020 |
| | | | | US | 11374286 | B2 | 28 June 2022 |
| US | 2011143181 | A1 | 16 June 2011 | KR | 20110067859 | A | 22 June 2011 |
| | | | | KR | 101093916 | B1 | 13 December 2011 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023085617 W
- GB 363632018 T